(19) Europäisches Patentamt
European Patent Office
Office européen des brevets

(11) EP 4 224 580 A1

(12) EUROPEAN PATENT APPLICATION
published in accordance with Art. 153(4) EPC

(43) Date of publication:
**09.08.2023 Bulletin 2023/32**

(21) Application number: **21875253.3**

(22) Date of filing: **16.09.2021**

(51) International Patent Classification (IPC):
***H01M 4/62*** (2006.01) ***C08F 220/02*** (2006.01)
***C08F 220/10*** (2006.01) ***C08G 73/04*** (2006.01)
***H01M 4/13*** (2010.01) ***H01M 4/139*** (2010.01)

(52) Cooperative Patent Classification (CPC):
**C08F 220/02; C08F 220/10; C08G 73/02; H01M 4/13; H01M 4/139; H01M 4/62;** Y02E 60/10

(86) International application number:
**PCT/JP2021/034113**

(87) International publication number:
**WO 2022/070951 (07.04.2022 Gazette 2022/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2020 JP 2020166584**

(71) Applicants:
- **FUJIFILM Wako Pure Chemical Corporation**
**Osaka 540-8605 (JP)**
- **FUJIFILM Corporation**
**Tokyo 106-8620 (JP)**

(72) Inventors:
- **KAWANO, Kei**
**Kawagoe-shi, Saitama 350-1101 (JP)**
- **TAKIMOTO, Kazuki**
**Kawagoe-shi, Saitama 350-1101 (JP)**
- **MORI, Kaho**
**Kawagoe-shi, Saitama 350-1101 (JP)**
- **MIMURA, Tomonori**
**Ashigarakami-gun, Kanagawa 258-8577 (JP)**
- **KINOSHITA, Ikuo**
**Ashigarakami-gun, Kanagawa 258-8577 (JP)**
- **SUGASAKI, Atsushi**
**Ashigarakami-gun, Kanagawa 258-8577 (JP)**

(74) Representative: **Patentanwaltskanzlei Hinkelmann**
**Lyonel-Feininger-Straße 28**
**80807 München (DE)**

# (54) SECONDARY BATTERY BINDER COMPOSITION, ELECTRODE COMPOSITION, ELECTRODE SHEET, SECONDARY BATTERY, PRODUCTION METHOD FOR ELECTRODE SHEET, AND PRODUCTION METHOD FOR SECONDARY BATTERY

(57) Provided is a secondary battery binder composition containing a water-soluble crosslinked polymer obtained by crosslinking a copolymer containing a (meth)acrylic acid component and a (meth)acrylic acid ester component as constitutional components by an aziridine compound, and water. Also provided are an electrode composition, an electrode sheet, a secondary battery, a production method for the electrode sheet, and a production method for the secondary battery.

FIG. 1

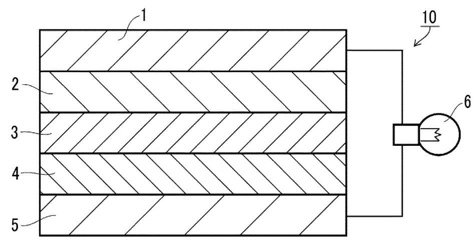


EP 4 224 580 A1

## Description

### Technical Field

The present invention relates to a secondary battery binder composition, an electrode composition, an electrode sheet, a secondary battery, a production method for an electrode sheet, and a production method for a secondary battery.

### Background Art

The secondary battery represented by a lithium ion secondary battery is used as a power source for portable electronic apparatuses such as a personal computer, a video camera, and a mobile phone. Recently, due to the global environmental issues such as reduction of carbon dioxide emissions, the secondary battery has become widespread as a power source for transportation equipment such as automobiles and as a battery for storing night-time electricity, electricity produced by renewable energy power generation, and the like.

The electrodes (positive and negative electrodes) of the lithium ion secondary battery have electrode active material layers (positive and negative electrode active material layers), and the electrode active material layers contain electrode active material particles that can absorb or release lithium ions during charge and discharge. In addition, because electron transport occurs between the electrode active material particles or between the electrode active material particles and a collector, it is required that electron conductivity be ensured. For efficient electron conduction, bonding properties between the electrode active material particles or bonding properties between the electrode active material particles and the collector are important. Usually, the electrode active material layers have a binder. However, the binder has a low electron transport ability, and there is usually a so-called trade-off relationship between the improvement of bonding properties and the improvement of electron conductivity.

Generally, an electrode of the lithium ion secondary battery is formed by coating a collector with a composition (slurry) for forming an electrode and drying the composition. Therefore, the slurry for forming an electrode is prepared by dispersing an electrode active material and a binder in a liquid medium. In recent years, as the environmental issues have attracted growing attention, a water-based liquid medium has been required, and a water-soluble (meth)acrylic binder suitable for a water-based slurry has been developed.

For example, Patent Literature 1 describes a negative electrode agent for a non-aqueous electrolyte secondary battery containing at least an active material and a binder. According to Patent Literature 1, the binder contains a first linear water-soluble polymer that has undergone a crosslinking treatment and a second linear water-soluble polymer that has not undergone a crosslinking treatment. According to Patent Literature 1, the negative electrode agent makes it possible to obtain an active material layer that exhibits high durability against internal stress during volume expansion and contraction during charge and discharge, and to suppress the continuous destruction and generation of solid electrolyte interphase (SEI) resulting from repeated charge and discharge.

In recent years, in order to further increase the capacity of the lithium ion secondary battery, the use of a silicon-based active material as a negative electrode active material has been actively studied. Using the silicon-based active material for a negative electrode makes it possible to increase the energy density. However, the silicon-based active material absorbs a large amount of lithium ions during charge and expands significantly, and thus contracts much during discharge. Therefore, in the lithium ion battery in which the silicon-based active material is used as a negative electrode active material, the negative electrode active material goes through a significant volume change during charge and discharge, and the battery performance is likely to deteriorate due to the repeated charge and discharge. That is, there is a limit on the improvement of cycle life.

As a technique to address such a problem, for example, Patent Literature 2 describes a negative electrode agent for a non-aqueous electrolyte secondary battery containing a negative electrode active material, a conductive auxiliary agent, and a binder. According to Patent Literature 2, the binder consists of a mixture of an aqueous polymer that has undergone a crosslinking treatment by the addition of a crosslinking agent, such as an aziridine-based crosslinking agent, to calcium polyacrylate or a polyacrylic acid ester having a molecular weight of 1,000,000 to 5,000,000 and an aqueous polymer that has a molecular weight of 1,000 to 1,000,000. According to Patent Literature 2, it is possible to improve the mechanical strength of the negative electrode agent and to suppress the continuous destruction and generation of SEI resulting from the repeated charge and discharge.

Citation List

Patent Literature 1: WO2016/051811A
Patent Literature 2: JP2017-004682A

## Summary of Invention

### Technical Problem

As the use of the non-aqueous secondary battery is diversified, higher energy density, lower resistance, and further improvement of cycle life are required to the non-aqueous secondary battery. However, as a result of conducting studies on binders for an electrode of the related art containing the binders for an electrode described in the Patent Literatures, the inventors of the present invention have revealed that in a case where a silicon-based active material is used as a negative electrode active material to increase the energy density of the non-aqueous secondary battery, it is difficult to sufficiently reduce the battery resistance, and the cycle life is not increased to the desired high level. In addition, it has been found that in a case where the binder for an electrode of the related art is used, there is a limit on the improvement of dispersibility of solid particles, such as an electrode active material and a conductive auxiliary agent, in an electrode composition containing a solvent.

An object of the present invention is to provide a secondary battery binder composition which makes it possible to obtain a composition (slurry) excellent in dispersibility of solid particles, such as an electrode active material and a conductive auxiliary agent, by being mixed with the solid particles, to sufficiently improve bonding properties between electrode active material particles or between electrode active material particles and a collector in a case where an electrode active material layer is formed using the composition, to sufficiently reduce resistance of the obtained secondary battery even in a case where an electrode active material going through a significant volume change during charge and discharge is used, and to sufficiently increase cycle life of the secondary battery.

Furthermore, another object of the present invention is to provide an electrode composition which is obtained by combining the binder composition and an electrode active material and to provide an electrode sheet and a secondary battery in which electrode composition is used. In addition, a still another object of the present invention is to provide a production method for the electrode sheet and a production method for the secondary battery.

### Solution to Problem

That is, the objects of the present invention have been achieved by the following means.

<1>

A secondary battery binder composition comprising: a water-soluble crosslinked polymer obtained by crosslinking a copolymer containing a (meth)acrylic acid component and a (meth)acrylic acid ester component as constitutional components by an aziridine compound; and water.

<2>

The secondary battery binder composition described in <1>, in which the water-soluble crosslinked polymer has a solubility of 10 g/L or more in water at 20°C.

<3>

The secondary battery binder composition described in <1> or <2>, in which the (meth)acrylic acid ester component contains a component having a glass transition temperature of 20°C or lower.

<4>

The secondary battery binder composition described in any one of <1> to <3>, in which the water-soluble crosslinked polymer satisfies the following <Condition I>.

<Condition I>

In an aqueous dispersion liquid in which a content of the water-soluble crosslinked polymer is 50 parts by mass with respect to a content of 60 parts by mass of acetylene black and a total content of the acetylene black and the water-soluble crosslinked polymer is 0.015% by mass, an average particle diameter of particles is 9.0 μm or less.

<5>

The secondary battery binder composition described in any one of <1> to <4>, in which the aziridine compound is a compound represented by any of the general formulas (1) to (3).

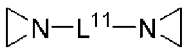 (1) 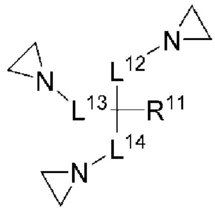 (2) 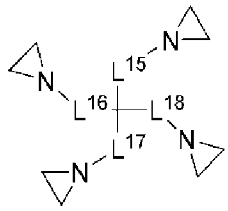 (3)

In the formulas, $R^{11}$ represents a hydrogen atom, a halogen atom, or an alkyl group. $L^{11}$ to $L^{18}$ represent a single bond or a divalent linking group.

<6>

The secondary battery binder composition described in <5>, in which the aziridine compound is a compound represented by the general formula (1) or (2).

<7>

The secondary battery binder composition described in any one of <1> to <6>, in which the water-soluble crosslinked polymer satisfies the following <Condition II>.

<Condition II>

A swelling ratio of the water-soluble crosslinked polymer is 1% by mass or more and less than 100% by mass with respect to a mixed solvent obtained by mixing 2 parts by mass of ethyl methyl carbonate with 1 part by mass of ethylene carbonate.

<8>

The secondary battery binder composition described in any one of <1> to <7>, in which the (meth)acrylic acid component contains a component having a (meth)acrylic acid salt structure.

<9>

The secondary battery binder composition described in <8>, in which the (meth)acrylic acid salt structure has a counterion derived from a polyvalent amine.

<10>

The secondary battery binder composition described in any one of <1> to <9>, in which a viscosity of a 10% by mass aqueous solution of the water-soluble crosslinked polymer is 300 mPas·s to 50,000 mPa·s.

<11>

The secondary battery binder composition described in any one of <1> to <10>, in which a weight-average molecular weight of the copolymer is 100,000 or more.

<12>

An electrode composition comprising: the secondary battery binder composition described in any one of <1> to <11>; and an active material that allows ions of a metal belonging to Group 1 or Group 2 of the periodic table to be inserted into and released from the active material.

<13>

An electrode sheet having a layer composed of the electrode composition described in <12>.

<14>

A secondary battery comprising a positive electrode, a separator, and a negative electrode in this order, in which at least one of a positive electrode active material layer constituting the positive electrode or a negative electrode active material layer constituting the negative electrode is a layer composed of the electrode composition described in <12>.

<15>

A production method for an electrode sheet, comprising: forming a film of the electrode composition described in <12>; and drying the film.

<16>

A production method for a secondary battery comprising: incorporating an electrode sheet obtained by the production method described in <15> into an electrode of a secondary battery.

## Advantageous Effects of Invention

The secondary battery binder composition (slurry) according to an embodiment of the present invention makes it possible to obtain a composition excellent in dispersibility of solid particles, such as an electrode active material and a conductive auxiliary agent, by being mixed with the solid particles. The secondary battery binder composition, the

electrode composition, and the electrode sheet according to an embodiment of the present invention make it possible to sufficiently improve bonding properties between electrode active material particles or between electrode active material particles and a collector in a secondary battery having an electrode prepared using the secondary battery binder composition, the electrode composition, and the electrode sheet, to reduce the resistance of the secondary battery even in a case where an electrode active material going through a significant volume change during charge and discharge is used, and to sufficiently increase the cycle life of the secondary battery.

In the secondary battery according an embodiment of the present invention, bonding properties between electrode active material particles or between electrode active material particles and a collector are sufficiently improved, which makes it possible to reduce the resistance during the battery operation even in a case where an electrode active material going through a significant volume change during charge and discharge is adopted, and makes the secondary battery have a sufficiently long cycle life.

With the production method for an electrode sheet according to an embodiment of the present invention, it is possible to obtain the electrode sheet according to the embodiment of the present invention. In addition, with the production method for a secondary battery according to an embodiment of the present invention, it is possible to obtain the secondary battery according to the embodiment of the present invention.

**(Brief Description of Drawings)**

Fig. 1 is a longitudinal cross-sectional view schematically showing a basic lamination structure regarding an embodiment of a secondary battery according to the present invention.

**Description of Embodiments**

In the description of the present invention, the numerical range described using "to" means a range that includes the numerical values listed before and after "to" as the lower limit and the upper limit.

In the present invention, the expression for a compound, constitutional component, or substituent is used not only in the sense meaning the compound, constitutional component, or substituent itself, but also in the sense including a salt or ion thereof. For example, a group having a dissociable hydrogen atom (a group having a hydrogen atom dissociated by the action of a base), such as a carboxy group, in a compound may have an ionic structure by the dissociation of the hydrogen atom or may have a salt structure. That is, in the present invention, "carboxy group contained in a compound or constitutional component" means a carboxylate ion or a salt thereof. As for the counterion that constitutes the salt structure, the description of counterions used in a case where the (meth)acrylic acid component, which will be described later, has a salt structure can be applied.

In the case of salt structure, the salt structure may contain one kind of salt or a mix of two or more kinds of salts, a mix of salt-type group and a group having a free acid structure may be in the compound (polymer), or a compound having a salt structure may be mixed with a compound having a free acid structure.

In addition, as long as the effects of the present invention are produced, the salt structure also means a partially modified structure. Furthermore, in the present invention, a compound or constitutional component not being specified regarding whether it is substituted or unsubstituted means that the compound or constitutional component may have arbitrary substituents as long as the effects of the present invention can be produced. The same shall be applied to substituents (for example, groups expressed as "alkyl group", "methyl group", "methyl", and the like) and linking groups (for example, groups expressed as "alkylene group", "methylene group", "methylene", and the like). Among such arbitrary substituents, a substituent selected from the substituent group Q, which will be described later, is a preferred substituent in the present invention.

In the present invention, in a case where a plurality of substituents, linking groups, and the like (hereinafter, called substituents and the like) is represented by a certain reference numeral or formula or in a case where a plurality of substituents and the like is specified at the same time, unless otherwise specified, the substituents and the like may be the same as or different from each other. The same shall be applied to the constitutional components of a polymer.

In the present invention, "(meth)acryl" is a concept including both the methacryl and acryl, and "(meth)acryloyl" is a concept including both the methacryloyl and acryloyl.

In the present invention, one kind of substance may be contained as each component, or two or more kinds of substances may be contained as each component.

In the present invention, "non-aqueous secondary battery" has a meaning including a non-aqueous electrolytic solution secondary battery and an all-solid state secondary battery. In the present invention, "non-aqueous electrolytic solution" means an electrolytic solution that substantially does not contain water. That is, as long as the effects of the present invention are not reduced, "non-aqueous electrolytic solution" may contain a trace of water. The concentration of water in "non-aqueous electrolytic solution" in the present invention is 200 ppm (based on mass) or less, preferably 100 ppm or less, and more preferably 20 ppm or less. It should be noted that the content of water in the non-aqueous

electrolytic solution is usually 1 ppm or more, because it is practically difficult to make an absolutely anhydrous non-aqueous electrolytic solution. "All-solid state secondary battery" means a secondary battery in which a solid electrolyte, such as an inorganic solid electrolyte or a solid-state polymer electrolyte, is used without using a liquid as an electrolyte.

In the present invention, in a case where the number of carbon atoms in a certain group is specified, unless otherwise specified in the present invention or present specification, the number of carbon atoms means the number of carbon atoms in the group. That is, in a case where the group is in the form of a group further having a substituent, the number of carbon atoms of the group means the number of carbon atoms counted without including the number of carbon atoms in the substituent.

In the present invention, "solid content" used in a case where a content or the content ratio is described means components other than water and the liquid medium that will be described later.

## Secondary battery binder composition

The secondary battery binder composition according to an embodiment of the present invention (hereinafter, also called "binder composition according to the embodiment of the present invention") is a binder composition suitable as a material forming members or layers constituting a secondary battery, preferably a non-aqueous secondary battery, and more preferably a non-aqueous electrolytic solution secondary battery. Typically, the binder composition according to the embodiment of the present invention can be suitably used for forming an electrode active material layer in an electrode of a secondary battery. Specifically, the binder composition according to the embodiment of the present invention can be used for forming an electrode (positive electrode and/or negative electrode) active material layer of a non-aqueous secondary battery by being mixed with an electrode active material (used in the sense that includes positive and negative electrode active materials which are also simply collectively called "active material"). It should be noted that the binder composition according to the embodiment of the present invention can be used by being applied to the surface of a separator of a secondary battery to form a heat-resistant layer, or can be used as a binder for coating a collector.

The binder composition according to the embodiment of the present invention contains a water-soluble crosslinked polymer obtained by crosslinking a copolymer containing a (meth)acrylic acid component and a (meth)acrylic acid ester component as constitutional components by an aziridine compound, and water.

The water-soluble crosslinked polymer contained in the binder composition according to the embodiment of the present invention functions, for example, as a binder that binds solid particles (such as an electrode active material and a conductive auxiliary agent) together in a layer formed of a composition obtained by mixing the binder composition according to the embodiment of the present invention with the solid particles. In addition, the water-soluble crosslinked polymer can also function as a binder that binds a collector and the solid particles together.

Furthermore, by being allowed to coexist in an aqueous dispersion liquid of the solid particles, the water-soluble crosslinked polymer is adsorbed onto the surface of the solid particles and also functions as a dispersant for the solid particles in an aqueous medium. In this way, the dispersibility or dispersion stability of the solid particles in the aqueous dispersion liquid can be improved. Here, the adsorption of the water-soluble crosslinked polymer onto the solid particles includes not only physical adsorption but also chemical adsorption (such as adsorption by chemical bond formation or adsorption by electron transfer).

The Patent Literatures 1 and 2 describe binders consisting of a mixture of 2 kinds of homopolymers, and state that one of the homopolymers has a crosslinking structure. However, these binders consisting of a mixture cannot sufficiently increase the cycle life. On the other hand, in the present invention, a copolymer containing a (meth)acrylic acid component and a (meth)acrylic acid ester component as constitutional components is crosslinked by aziridine to obtain a water-soluble crosslinked polymer. Using such a water-soluble crosslinked polymer as a binder of a secondary battery makes it possible to achieve excellent cycle life, even though the reason is unclear. One of the reasons is assumed to be as below. In a homopolymer, it is difficult to finely control hydrophilicity and hydrophobicity of the polymer. In contrast, in a copolymer, it is possible to finely control hydrophilicity and hydrophobicity. Therefore, presumably, crosslinking a specific copolymer by using aziridine to obtain a water-soluble crosslinked polymer may improve dispersibility or dispersion stability of solid particles including an electrode active material.

## Water-soluble crosslinked polymer

The binder composition according to the embodiment of the present invention contains, as a binder, a water-soluble crosslinked polymer obtained by crosslinking a copolymer having a constitutional component derived from a (meth)acrylic acid and a constitutional component derived from a (meth)acrylic acid ester by using an aziridine compound.

"Water-soluble" in the water-soluble crosslinked polymer means that the solubility of the polymer in water at 20°C is 0.1 g/L (meaning that 0.1 g of the water-soluble crosslinked polymer is dissolved in 1 liter of water) or more. The water solubility is preferably 1 g/L or more, more preferably 10 g/L or more, even more preferably 50 g/L or more, and

still more preferably 100 g/L or more.

It is preferable that the water-soluble crosslinked polymer satisfy the following <Condition I>.

<Condition I>

In an aqueous dispersion liquid obtained by dispersing acetylene black in water such that a content of the water-soluble crosslinked polymer is 50 parts by mass with respect to a content of 60 parts by mass of the acetylene black and that a total content of the acetylene black and the water-soluble crosslinked polymer is 0.015% by mass, an average particle diameter of particles is 9.0 μm or less.

Here, the aqueous dispersion liquid does not contain components other than the water-soluble crosslinked polymer, the acetylene black, and water.

In addition, as the acetylene black, acetylene black having an average particle diameter of 30 to 40 nm and a specific surface area of 65 to 70 $m^2/g$ is preferable. The average particle diameter of the acetylene black means the volume average particle diameter, and the specific surface area means a value measured by the BET method. As the acetylene black satisfying the conditions of an average particle diameter of 30 to 40 nm and a specific surface area of 65 to 70 $m^2/g$, specifically, for example, a DENKA BLACK powdery product manufactured by Denka Company Limited. (average particle diameter: 35 nm, specific surface area: 68 $m^2/g$ (representative values posted on Denka's website)) may be used.

In addition, the preparation conditions and measurement conditions of the aqueous dispersion liquid are as explained in Examples which will be described later. The average particle diameter of the particles in the aqueous dispersion liquid defined in the <Condition I> is a value measured by a dynamic light scattering method using a zeta potential analyzer.

In a case where the water-soluble crosslinked polymer satisfies the <Condition I>, the acetylene black is dispersed in water in a state where the water-soluble crosslinked polymer is adsorbed onto the periphery of the acetylene black, which effectively suppresses the aggregation of the acetylene black particles. Therefore, the water-soluble crosslinked polymer that satisfies the <Condition I> allows the acetylene black to exhibit excellent dispersibility or excellent dispersion stability in an aqueous dispersion liquid, and in a case where such an aqueous dispersion liquid is mixed with solid particles such as an electrode active material and a conductive auxiliary agent, it is possible to obtain a composition excellent in dispersibility or dispersion stability of the solid particles. In addition, using such a composition to form an electrode of a secondary battery makes it possible to further improve the bonding properties between the solid particles and a collector (hereinafter, also simply described as bonding properties) and to effectively improve the cycle characteristics of the obtained secondary battery.

The average particle diameter of the particles in the <Condition I> is preferably 8.0 μm or less, more preferably 6.0 μm or less, even more preferably 4.0 μm or less, and particularly preferably 2.5 μm or less.

The water-soluble crosslinked polymer has a structure in which a copolymer containing a (meth)acrylic acid component and a (meth)acrylic acid ester component as constitutional components is crosslinked by an aziridine compound. The water-soluble crosslinked polymer exhibits a predetermined viscosity.

From the viewpoint of improving the coating properties of the electrode composition to be applied to a substrate such as a collector, the viscosity of a 10% by mass aqueous solution of the water-soluble crosslinked polymer is preferably 300 mPa's to 50,000 mPa s, more preferably 500 mPa s to 30,000 mPa s, and even more preferably 500 mPa s to 20,000 mPa s.

The viscosity is obtained by measuring the viscosity of the 10% by mass aqueous solution of the water-soluble crosslinked polymer by using VISCOMETER TVB-10 (trade name, manufactured by TOKISANGYO) with No. M4 rotor under the conditions of a rotation speed of 12 rpm, a measurement temperature of 20°C, and a measurement time of 2 minutes.

**Copolymer containing (meth)acrylic acid component and (meth)acrylic acid ester component as constitutional components**

**(1) (Meth)acrylic acid component**

The (meth)acrylic acid component contained as a constitutional component of the copolymer has a carboxy group or a salt structure thereof. Therefore, the (meth)acrylic acid component contributes to the dispersion of solid particles in the water-soluble crosslinked polymer by the group that can be adsorbed onto the surface of solid particles such as a silicon-based active material, and has a function of imparting water solubility to the water-soluble crosslinked polymer.

It is preferable that the (meth)acrylic acid component contain a component having a (meth)acrylic acid salt structure. It should be noted that as will be described later, it is also preferable that a crosslinked structure different from

the crosslink by the aziridine compound that will be described later be formed by the neutralization with a metal having a valency of 2 or higher or a polyfunctional organic base.

By crosslinking the copolymer containing the (meth)acrylic acid component having the salt structure as a constitutional component by using an appropriate amount of aziridine compound, it is possible to adjust the content of the salt structure in the water-soluble crosslinked polymer and to improve the water solubility of the polymer to a desired level. In addition, it is considered that the interactivity with the surface of the active material or collector may also be enhanced, which may contribute to the improvement of the bonding properties.

As the counterion for forming the (meth)acrylic acid salt structure, common cations can be used.

Examples of cations as the counterion include metal cations. Examples of the metal cations include cations of metals belonging to Group 1 of the periodic table, such as a sodium ion, a lithium ion, or a potassium ion, cations of metals belonging to Group 2 of the periodic table, such as calcium ion or magnesium ion, a zinc ion, and the like.

In addition, it is also preferable that the (meth)acrylic acid salt structure have a cation derived from an amine as a counterion. The amine may be a monovalent monoamine, a polyvalent amine having a valency of 2 or higher, a low-molecular-weight compound, or a high-molecular-weight compound such as a polymer.

As the monovalent amine, a monoalkylamine such as pentylamine, hexylamine, or octylamine, a dialkylamine such as dibutylamine, a trialkylamine such as triethylamine, an alcohol amine such as ethanolamine, an aromatic ring-containing amine such as benzylamine or dimethylaminopyridine, or a polycyclic amine such as diazabicycloundecene can be preferably used.

As the polyvalent amine, a low-molecular-weight polyvalent amine, such as ethylenediamine or histidine, or a high-molecular-weight polyvalent amine having an amino group in a polymer constitutional unit, such as polyethyleneimine, can be preferably used. Among these, the high-molecular-weight polyvalent amine is more preferable. It should be noted that in a case where the amine is a polyvalent amine, a plurality of amines present in a molecule may be each independently any of a primary amine, a secondary amine, or a tertiary amine. In addition, in a case where the amine is a high-molecular-weight polyvalent amine, the polymer structure may be linear or branched, and is preferably branched. The weight-average molecular weight of the high-molecular-weight polyvalent amine is preferably 1,000 to 50,000, and more preferably 5,000 to 30,000.

The counterion preferably contains a cation of a metal belonging to Group 1 of the periodic table, more preferably contains a sodium ion or a lithium ion, and even more preferably contains the sodium ion.

In a case where the (meth)acrylic acid salt structure contains a sodium ion as a counterion, the resistance and cycle characteristics of the secondary battery can be further improved on condition that the water-soluble crosslinked polymer has one kind of (meth)acrylic acid ester component which will be described later, and the cycle characteristics can be further improved on condition that the water-soluble crosslinked polymer has two or more kinds of (meth)acrylic acid ester components which will be described later.

From the viewpoint of improving breaking energy of the water-soluble crosslinked polymer, it is also preferable that the (meth)acrylic acid salt structure contain a cation derived from an amine, particularly, a cation derived from a polyvalent amine as a counterion.

Two or more kinds of counterions may be used for forming the salt structure. For example, using a metal cation and a cation derived from an amine in combination is also preferable, using a cation of a metal belonging to Group 1 of the periodic table and a cation derived from a polyvalent amine in combination is more preferable, and using a sodium ion and a cation derived from polyethyleneimine in combination is even more preferable.

In a case where the metal cation and the cation derived from an amine are used in combination, the water-soluble crosslinked polymer may have one kind of (meth)acrylic acid ester component which will be described later or have two or more kinds of (meth)acrylic acid ester components which will be described later.

The ratio of the cation of a metal belonging to Group 1 of the periodic table to the counterion is preferably 50 mol% or more, more preferably 70 mol% or more, and even more preferably 90 mol% or more. The upper limit of the ratio is not particularly limited, and may be 100 mol% or less.

The ratio of the cation derived from a polyvalent amine to the counterion is preferably 50 mol% or less, more preferably 30 mol% or less, and even more preferably 10 mol% or less. The lower limit of the ratio is not particularly limited, and may be 0 mol% or more.

It is preferable that the (meth)acrylic acid component contain a constitutional component in which the terminal of a carboxylic acid is a hydrogen atom and a constitutional component having a (meth)acrylic acid salt structure (that is, a constitutional component in which the terminal of a carboxylic acid is not a hydrogen atom). In this case, the ratio of the content of the constitutional component having a (meth)acrylic acid salt structure with respect to the total content of the (meth)acrylic acid component, that is, a degree of neutralization of the copolymer is preferably 20 mol% or more, more preferably 40 mol% or more, even more preferably 50 mol% or more, and particularly preferably 70 mol% or more. The degree of neutralization of the polymer may be 100 mol%, and is preferably 95 mol% or less and more preferably 90 mol% or less.

It should be noted that the degree of neutralization means a degree of neutralization of the copolymer before

being crosslinked by an aziridine compound. The degree of neutralization can be measured by the method explained in Examples that will be described later.

The constitutional component having a (meth)acrylic acid salt structure can be obtained by a reaction between a (meth)acrylic acid component and a neutralizing agent. Although there is no particular limit on the timing of reacting the neutralizing agent, it is preferable to react the neutralizing agent with the copolymer.

Examples of the neutralizing agent include hydroxides of metals belonging to Group 1 of the periodic table, carbonates, hydrogen carbonates, hydroxides of metals belonging to Group 2 of the periodic table, inorganic bases such as carbonates, organic bases such as a monoamine, a polyvalent amine, diazabicycloundecene, and pyridine, and the like. One kind of neutralizing agent may be used alone, or two or more kinds of neutralizing agents may be used. Examples of preferred neutralizing agents include lithium hydroxide, sodium hydroxide, and polyethyleneimine.

Specific examples of the (meth)acrylic acid component will be shown below, but the (meth)acrylic acid component in the present invention is not limited thereto. The acrylic acid moiety in the following specific examples may be a methacrylic acid, and the (meth)acrylic acid component may have salt structures other than the following specific examples.

A-1
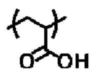
A-2
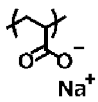
A-3
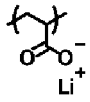
A-4
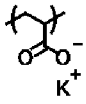
A-5
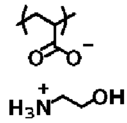
A-6
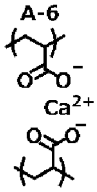
A-7
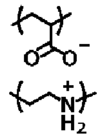

**(2) (Meth)acrylic acid ester component**

The (meth)acrylic acid ester component contained as a constitutional component of the copolymer lowers the glass transition temperature (also abbreviated to Tg) of the water-soluble crosslinked polymer in the water-soluble crosslinked polymer, and increases breaking elongation in a tensile test. In this way, the (meth)acrylic acid ester component contributes to the improvement of breaking energy.

The (meth)acrylic acid ester component preferably contains a (meth)acrylic acid alkyl ester component or a (meth)acrylic acid aryl ester component, and more preferably contains the (meth)acrylic acid alkyl ester component.

The alkyl ester moiety constituting the (meth)acrylic acid alkyl ester component and the aryl ester moiety constituting the (meth)acrylic acid aryl ester component may have a substituent. Examples of the substituent include a hydroxy group, a carboxy group, an amino group, an alkoxy group, a phenyl group, an aliphatic ring group (for example, an aliphatic hydrocarbon ring group or a cyclic ether group), and a halogen atom.

From the viewpoint of adjusting Tg of the water-soluble crosslinked polymer to a low temperature, it is preferable that the (meth)acrylic acid ester component do not have a carboxylate.

In addition, from the viewpoint of inhibiting the water-soluble crosslinked polymer from undergoing gelation by a non-aqueous electrolytic solution, it is preferable that the (meth)acrylic acid ester component exhibit high solubility in the non-aqueous electrolytic solution and do not have a functional group (for example, a cyano group, a methoxycarbonyl group, or the like) that is highly likely to undergo gelation by the non-aqueous electrolytic solution.

It is preferable that the (meth)acrylic acid ester component do not have two or more structures derived from a (meth)acryloyloxy group in one constitutional component.

From the viewpoint of further improving the dispersibility or dispersion stability of the solid particles, it is preferable that the (meth)acrylic acid ester component contain a component having a glass transition temperature of 20°C or lower (hereinafter, also called a component T). The glass transition temperature of the component T is preferably 15°C or lower and more preferably 10°C or lower. The lower limit thereof is not particularly limited, but is practically -100°C or higher.

The glass transition temperature of the component T means the glass transition temperature of a homopolymer of the component T, and the value of glass transition temperature in the table in Chapter 36 of POLYMER HANDBOOK, 4th edition can be adopted. In a case where the glass transition temperature is not described in the above document, a glass transition temperature measured using a differential scanning calorimeter (DSC) under the measurement conditions described in Examples is adopted.

Examples of monomers leading to the component T include methyl acrylate (8°C), ethyl acrylate (-20°C), butyl acrylate (-55°C), isoamyl acrylate (-45°C), 2-ethylhexyl acrylate (-70°C), lauryl acrylate (-3°C), methoxy-triethylene glycol acrylate (-50°C), phenoxyethyl acrylate (-22°C), phenoxy-polyethylene glycol acrylate (for example, LIGHT ACRYLATE P-200A (trade name) manufactured by Kyoeisha Chemical Co., Ltd., -25°C), 2-hydroxyethylacrylate (-7°C), and 2-acryloyloxyethyl-succinate (-40°C). The temperature in the parentheses is the glass transition temperature. Here, the

monomers leading to the component T are not limited thereto.

In addition, it is known that a methacrylic acid ester component with an alkyl group having 4 to 16 carbon atoms and an acrylic acid ester component with an alkyl group having 1 to 14 carbon atoms have a glass transition temperature of 20°C or lower. Therefore, it is possible to appropriately select the homopolymer of the (meth)acrylic acid ester component based on this knowledge.

In the water-soluble crosslinked polymer, the ratio of the content of the component T to the content of the (meth)acrylic acid ester component is preferably 40% by mass or more, more preferably 60% by mass or more, and even more preferably 80% by mass or more. The upper limit of the ratio is not particularly limited, and can be 100% by mass. It should be noted that the ratio of the content of the component T with respect to the total content of the constitutional components of the copolymer is preferably more than 20% by mass, and more preferably more than 80% by mass.

The (meth)acrylic acid ester component is preferably represented by the general formula (E-1).

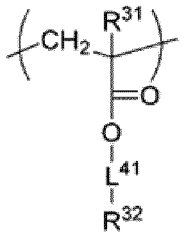

Formula (E-1)

In the above formula, $R^{31}$ represents a hydrogen atom or a methyl group. The methyl group that can be adopted as $R^{31}$ is preferably an unsubstituted methyl group.

$R^{32}$ represents a hydrogen atom, a hydroxy group, a carboxy group, an amino group, an alkyl group having 1 to 12 carbon atoms, a phenyl group, an aliphatic ring group, or a halogen atom. The chemical formula weight of $R^{32}$ is preferably 1 to 2,000, more preferably 15 to 500, and even more preferably 17 to 200. The alkyl group having 1 to 12 carbon atoms may be linear or branched. The number of carbon atoms in the alkyl group is preferably 1 to 6, and more preferably 1 to 4.

Preferred examples of the aliphatic ring group that can be adopted as $R^{32}$ include an aliphatic hydrocarbon ring group and a cyclic ether group.

The number of carbon atoms in the aliphatic hydrocarbon ring group is preferably 3 to 18, and more preferably 3 to 12. Examples thereof include isobornyl.

The cyclic ether group is preferably a 3- to 6-membered ring, and more preferably a 5- or 6-membered ring. Examples thereof include tetrahydrofuryl.

In the amino group that can be adopted as $R^{32}$, a nitrogen atom may be substituted with an alkyl group or an aryl group. As the amino group, $-NH_2$ or an amino group in which a nitrogen atom is substituted with alkyl is preferable, and a dialkylamino group is more preferable.

$R^{32}$ is preferably a hydrogen atom, a hydroxy group, a carboxy group, an alkyl group having 1 to 12 carbon atoms, or an aliphatic ring group, more preferably the hydroxy group, the carboxy group, the alkyl group having 1 to 12 carbon atoms, or the aliphatic ring group, and even more preferably the hydroxy group.

$L^{41}$ represents an alkylene group having 1 to 16 carbon atoms, an arylene group having 6 to 12 carbon atoms, an oxygen atom, a sulfur atom, a carbonyl group, or a linking group as a combination of these. Here, the portion to be bonded to a (meth)acryloyloxy group is the alkylene group having 1 to 16 carbon atoms or the arylene group having 6 to 12 carbon atoms, and in a case where $L^{41}$ is bonded to $R^{32}$ through the alkylene group having 1 to 16 carbon atoms, $R^{32}$ represents a hydrogen atom, a hydroxy group, a carboxy group, an amino group, a phenyl group, or a halogen atom (preferably a fluorine atom or a chlorine atom). The number of carbon atoms in the alkylene group having 1 to 16 carbon atoms is preferably 1 to 12, more preferably 1 to 10, even more preferably 1 to 8, and particularly preferably 1 to 6.

The chemical formula weight of $L^{41}$ is preferably 14 to 2,000, more preferably 28 to 500, and even more preferably 40 to 200. The alkylene group having 1 to 16 carbon atoms that $L^{41}$ can have may be linear or branched. The number of carbon atoms in this alkylene group is preferably 1 to 12, more preferably 1 to 10, even more preferably 1 to 8, and particularly preferably 1 to 6.

Preferred examples of the linking group formed by combining the alkylene group having 1 to 16 carbon atoms, the arylene group having 6 to 12 carbon atoms, the oxygen atom, the sulfur atom, or the carbonyl group, which can be adopted as $L^{41}$, include -[alkylene having 1 to 16 carbon atoms-O]$_m$- and -[alkylene having 1 to 16 carbon atoms]-[O-carbonyl]-[alkylene having 1 to 16 carbon atoms). m represents an average repetition number, which is 1 to 50, preferably 1 to 10, and more preferably 2 or 3.

$L^{41}$ is preferably the alkylene group having 1 to 16 carbon atoms, -[alkylene having 1 to 16 carbon atoms-O]$_m$-, or -[alkylene having 1 to 16 carbon atoms]-[O-carbonyl]-[alkylene having 1 to 16 carbon atoms], and more preferably

the alkylene group having 1 to 16 carbon atoms. The above description can be applied to the number of carbon atoms in the alkylene group.

The chemical formula weight of the (meth)acrylic acid ester component is preferably 80 to 4,100, and more preferably 80 to 1,100.

From the viewpoint of further improving the dispersibility or dispersion stability of the solid particles, it is preferable that the (meth)acrylic acid ester component contain a hydroxyalkyl (meth)acrylate component. The ratio of the hydroxyalkyl (meth)acrylate component with respect to the total content of the (meth)acrylic acid ester component contained in the water-soluble crosslinked polymer is preferably 40% by mass or more, more preferably 70% by mass or more, even more preferably 80% by mass or more, particularly preferably 85% by mass or more, and most preferably 90% by mass or more. The upper limit of the ratio is not particularly limited, and can be 100% by mass. It should be noted that the ratio of the content of the hydroxyalkyl (meth)acrylate component with respect to the total content of constitutional components of the copolymer is preferably more than 20% by mass, and more preferably more than 80% by mass.

Particularly, from the viewpoint of further improving (reducing) the resistance of the secondary battery and further improving the cycle characteristics, it is preferable that the (meth)acrylic acid ester component constituting the water-soluble crosslinked polymer totally consist of the hydroxyalkyl (meth)acrylate component. That is, it is particularly preferable that the copolymer be composed of the (meth)acrylic acid component and the hydroxyalkyl (meth)acrylate component.

Specific examples of the (meth)acrylic acid ester component will be shown below, but the (meth)acrylic acid ester component in the present invention is not limited thereto. It should be noted that the parenthesis in the following structural formula means that the portion in the parenthesis is a repeating unit, and the repetition number thereof has the same definition as m described above.

D-1 D-2 D-3 D-4 D-5 D-6 D-7 D-8 D-9 D-10 D-11 D-12

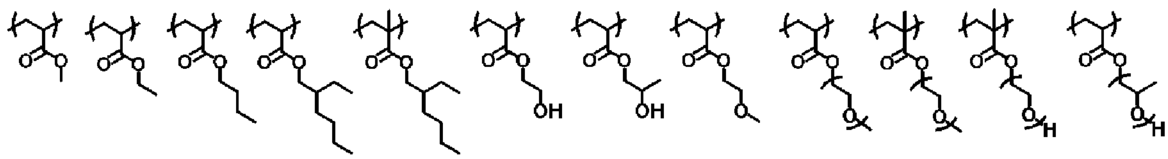

D-13 D-14 D-15 D-16 D-17

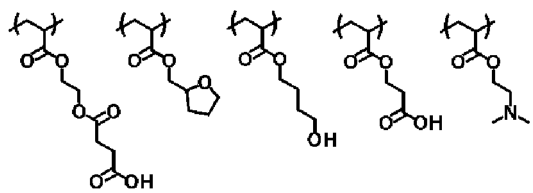

(3) **Other constitutional components**

As long as the effects of the present invention are produced, the copolymer may contain constitutional components (hereinafter, also called other constitutional components) other than the (meth)acrylic acid component and the (meth)acrylic acid ester component.

As those other constitutional components, constitutional components that can be used in the binder for a secondary battery can be used without particular limitation. Examples thereof include a vinyl-based component, such as (meth)acrylonitrile, vinyl acetate, or styrene, a (meth)acrylamide component, and the like.

The content of the (meth)acrylic acid component with respect to the total content of the constitutional components of the copolymer is preferably 1% to 50% by mass, more preferably 3% to 40% by mass, even more preferably 5% to 30% by mass, and particularly preferably 5% to 20% by mass.

The content of the (meth)acrylic acid ester component with respect to the total content of the constitutional components of the copolymer is preferably 50% to 99% by mass, more preferably 60% to 97% by mass, even more preferably 70% to 95% by mass, and particularly preferably 80% to 95% by mass.

The content of those other constitutional components with respect to the total content of the constitutional components of the copolymer is preferably 0% to 49% by mass, more preferably 0% to 37% by mass, even more preferably 0% to 25% by mass, and particularly preferably 0% to 15% by mass.

### Aziridine compound

The aziridine compound is not particularly limited as long as it can crosslink the copolymer. The compound known as an aziridine crosslinking agent can be used without particular limitation.

The number of aziridinyl groups in the aziridine compound may be 2 or more, and is preferably 2 to 4 and more preferably 2 or 3.

The molecular weight of the aziridine compound is not particularly limited as long as the effects of the present invention can be produced. For example, the molecular weight of the aziridine compound is preferably 80 to 800, more preferably 150 to 600, and even more preferably 250 to 500.

The aziridine compound is preferably a compound represented by any of the general formulas (1) to (3), and is more preferably a compound represented by the general formula (1) or (2).

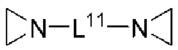 (1) 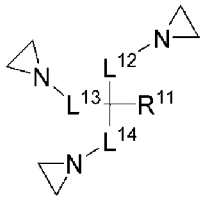 (2) 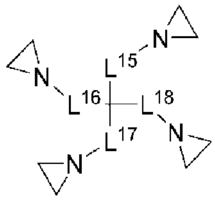 (3)

In the formulas, $R^{11}$ represents a hydrogen atom, a halogen atom, or an alkyl group, and $L^{11}$ to $L^{18}$ represent a single bond or a divalent linking group and are preferably the divalent linking group.

The alkyl group and halogen atom that can be adopted as $R^{11}$ have the same definition as the alkyl group and halogen atom in the substituent group Q which will be described later, and the preferred ranges thereof are also the same.

The alkyl group that can be adopted as $R^{11}$ may be unsubstituted or may have a substituent. Examples of the substituent that the alkyl group represented by $R^{11}$ may have include a substituent selected from the substituent group Q which will be described later.

The number of carbon atoms in the alkyl group that can be adopted as $R^{11}$ is preferably 1 to 20, more preferably 1 to 12, even more preferably 1 to 6, and particularly preferably 1 to 3.

Examples of the halogen atom that can be adopted as $R^{11}$ include a fluorine atom, a chlorine atom, a bromine atom, and an iodine atom. Among these, the fluorine atom or the chlorine atom is preferable.

$R^{11}$ is preferably an alkyl group.

The divalent linking group that can be adopted as $L^{11}$ to $L^{18}$ is not limited as long as the divalent linking group can be bonded to a nitrogen atom in an aziridinyl group (as long as the divalent linking group functions as a linking group). Preferred examples of the divalent linking group include a group selected from an alkylene group, an arylene group, -O-, -S-, -COO-, and -CONR$^{50}$- and a divalent linking group formed by bonding of two or more of these groups. $R^{50}$ represents a hydrogen atom or an alkyl group.

The number of carbon atoms in the alkylene group constituting the divalent linking group that can be adopted as $L^{11}$ to $L^{18}$ is preferably 1 to 10, more preferably 1 to 8, even more preferably 1 to 6, particularly preferably 1 to 4, and most preferably 1 or 2.

The number of carbon atoms in the arylene group constituting the divalent linking group that can be adopted as $L^{11}$ to $L^{18}$ is preferably 6 to 14, more preferably 6 to 10, and even more preferably 6. The arylene group is most preferably a 1,4-phenylene group.

The description of the alkyl group represented by $R^{11}$ can be preferably applied to the alkyl group that can be adopted as $R^{50}$.

A hydrogen atom is preferable as $R^{50}$.

The number of linked atoms in the divalent linking group that can be adopted as $L^{11}$ is preferably 1 to 30, more preferably 3 to 25, and even more preferably 5 to 20.

The number of linked atoms in the divalent linking group that can be adopted as $L^{12}$ to $L^{18}$ is preferably 1 to 20, more preferably 1 to 15, and even more preferably 3 to 10.

In the present invention, "number of linked atoms in the divalent linking group that can be adopted as $L^{11}$" means the number of linked atoms constituting the shortest molecular chain that links the nitrogen atoms of two aziridinyl groups. For example, in the case of CHEMITITE DZ-22E (trade name, manufactured by NIPPON SHOKUBAI CO., LTD.), which is an aziridinyl compound that will be described later, the number of atoms in the linking group $L^{11}$ is 13.

In the present invention, "the number of linked atoms in the divalent linking group that can be adopted as $L^{12}$ to $L^{18}$" means the number of linked atoms constituting the shortest molecular chain that links a nitrogen atom in an aziridinyl group to a carbon atom to which $R^{11}$ is bonded or a carbon atom to which $L^{15}$ to $L^{18}$ are bonded. For example, in the case of CHEMITITE PZ-33 (trade name, manufactured by NIPPON SHOKUBAI CO., LTD.), which is an aziridine

compound that will be described later, the number of atoms in each of the linking groups $L^{12}$ to $L^{14}$ is 5.

The divalent linking group that can constitute the linking groups $L^{11}$ to $L^{18}$ is more preferably a group containing at least one of -COO- or -$CONR^{50}$-, and even more preferably a divalent linking group which contains at least one of -COO- or -$CONR^{50}$- and is formed by bonding to one group or two or more groups selected from an alkylene group and an arylene group.

The number of the alkylene group, the arylene group, -O-, -S-, -COO-, and -$CONR^{50}$-, the groups being capable of constituting the linking groups $L^{11}$ to $L^{18}$, to be combined is preferably 1 to 7 and more preferably 1 to 5.

Specific examples of the linking group $L^{11}$ include -CONH- arylene-alkylene-arylene-NHCO-.

Specific examples of the linking groups $L^{12}$ to $L^{18}$ include alkylene-COO-alkylene.

The ratio of the content of the structural part derived from the aziridine compound to the content of the structural part derived from the copolymer constituting the water-soluble crosslinked polymer is not particularly limited, as long as the copolymer is crosslinked and the effects of the present invention are produced. For example, the content of the structural part derived from the aziridine compound with respect to 100 parts by mass of the structural part derived from the copolymer is preferably 0.3 to 10 parts by mass, more preferably 0.7 to 7.0 parts by mass, and even more preferably 1.0 to 5.0 parts by mass.

**Substituent group Q**

In the present invention, preferred examples of substituents include a substituent selected from the following substituent group Q.

In addition, in the present invention, in a case where simply the term "substituent" is mentioned, the substituent group Q is referred to, and in a case where each group, for example, "alkyl group" is simply mentioned, a group corresponding to the substituent group Q is preferably adopted.

Furthermore, in the present specification, in a case where an alkyl group is described as distinct from a cyclic (cyclo)alkyl group, "alkyl group" is used in the sense including a linear alkyl group and a branched alkyl group. In contrast, in a case where an alkyl group is described as not being distinct from a cyclic alkyl group and in a case where there is no specific comment, "alkyl group" is used in the sense including a linear alkyl group, a branched alkyl group, and a cycloalkyl group. The same shall be applied to a group (such as an alkoxy group, an alkylthio group, or an alkenyloxy group) containing a group that can have a cyclic structure (such as an alkyl group, an alkenyl group, or an alkynyl group) and a compound containing the group that can have a cyclic structure. In a case where a group can form a cyclic skeleton, the lower limit of the number of atoms of the group forming the cyclic skeleton is 3 or more and preferably 5 or more, regardless of the lower limit of the number of atoms specifically described below for the group that can have such a structure.

In the following description of the substituent group Q, for example, just as "alkyl group" and "cycloalkyl group", sometimes a group having a linear or branched structure and a group having a cyclic structure are separately described, such that a clear distinction is made therebetween.

Examples of the substituent group Q include the following groups.

Examples of the substituent group Q include an alkyl group (preferably an alkyl group having 1 to 20 carbon atoms, for example, methyl, ethyl, isopropyl, t-butyl, pentyl, heptyl, 1-ethylpentyl, benzyl, 2-ethoxyethyl, 1-carboxymethyl, or the like), an alkenyl group (preferably an alkenyl group having 2 to 20 carbon atoms, for example, vinyl, allyl, oleyl, or the like), an alkynyl group (preferably an alkynyl group having 2 to 20 carbon atoms, for example, ethynyl, butadiynyl, phenylethynyl, or the like), a cycloalkyl group (preferably a cycloalkyl group having 3 to 20 carbon atoms, for example, cyclopropyl, cyclopentyl, cyclohexyl, 4-methylcyclohexyl, or the like), an aryl group (preferably an aryl group having 6 to 26 carbon atoms, for example, phenyl, 1-naphthyl, 4-methoxyphenyl, 2-chlorophenyl, 3-methylphenyl, or the like), a heterocyclic group (preferably a heterocyclic group having 2 to 20 carbon atoms, and more preferably a 5- or 6-membered heterocyclic group having at least one of an oxygen atom, a sulfur atom, or a nitrogen atom as a ring-constituting atom, the heterocyclic group includes an aromatic heterocyclic group and an aliphatic heterocyclic group, for example, a tetrahydropyrane ring group, a tetrahydrofuran ring group, 2-pyridyl, 4-pyridyl, 2-imidazolyl, 2-benzimidazolyl, 2-thiazolyl, 2-oxazolyl, or the like), an alkoxy group (preferably an alkoxy group having 1 to 20 carbon atoms, for example, methoxy, ethoxy, isopropyloxy, benzyloxy, or the like), an aryloxy group (preferably an aryloxy group having 6 to 26 carbon atoms, for example, phenoxy, 1-naphthyloxy, 3-methylphenoxy, 4-methoxyphenoxy, or the like), a heterocyclic oxy group (a group composed of the heterocyclic group and a -O- group bonded thereto), an alkoxycarbonyl group (preferably an alkoxycarbonyl group having 2 to 20 carbon atoms, for example, ethoxycarbonyl, 2-ethylhexyloxycarbonyl, or the like), an aryloxycarbonyl group (preferably, an aryloxycarbonyl group having 6 to 26 carbon atoms, for example, phenoxycarbonyl, 1-naphthyloxycarbonyl, 3-methylphenoxycarbonyl, 4-methoxyphenoxycarbonyl, or the like), an amino group (preferably an amino group having 0 to 20 carbon atoms, including an amino group substituted with a group selected from an alkyl group and an aryl group, for example, amino (-$NH_2$), N,N-dimethylamino, N,N-diethylamino, N-ethylamino, anilino, or the like), a sulfamoyl group (preferably a sulfamoyl group having 0 to 20 carbon atoms, including a sulfamoyl

group substituted with a group selected from an alkyl group and an aryl group, for example, sulfamoyl ($-SO_2NH_2$), N,N-dimethylsulfamoyl, N-phenylsulfamoyl, or the like), an acyl group (preferably an acyl group having 1 to 20 carbon atoms containing an alkylcarbonyl group, an alkenylcarbonyl group, an alkynylcarbonyl group, an arylcarbonyl group, and a heterocyclic carbonyl group, for example, acetyl, propionyl, butyryl, octanoyl, hexadecanoyl, acryloyl, methacryloyl, crotonoyl, benzoyl, naphthoyl, nicotinoyle, or the like), an acyloxy group (preferably an acyloxy group having 1 to 20 carbon atoms containing an alkylcarbonyloxy group, an alkenylcarbonyloxy group, an alkynylcarbonyloxy group, an arylcarbonyloxy group, and a heterocyclic carbonyloxy group, for example, acetyloxy, propionyloxy, butyryloxy, octanoyloxy, hexadecanoyloxy, acryloyloxy, methacryloyloxy, crotonoyloxy, benzoyloxy, naphthoyloxy, nicotinoyloxy, or the like), a carbamoyl group (preferably a carbamoyl group having 1 to 20 carbon atoms, including a carbamoyl group substituted with a group selected from an alkyl group and an aryl group, for example, N,N-dimethylcarbamoyl, N-phenylcarbamoyl, or the like), an acylamino group (preferably an acylamino group having 1 to 20 carbon atoms, preferred examples of the acyl group in the acylamino group include the acyl group, for example, acetylamino, benzoylamino, or the like), an alkylthio group (preferably an alkylthio group having 1 to 20 carbon atoms, for example, methylthio, ethylthio, isopropylthio, benzylthio, or the like), an arylthio group (preferably an arylthio group having 6 to 26 carbon atoms, for example, phenylthio, 1-naphthylthio, 3-methylphenylthio, 4-methoxyphenylthio, or the like), an arylsilyl group (preferably, an arylsilyl group having 6 to 42 carbon atoms, for example, triphenylsilyl or the like), a heterocyclic thio group (a group composed of the heterocyclic group and a -S- group bonded thereto), an alkylsulfonyl group (preferably an alkylsulfonyl group having 1 to 20 carbon atoms, for example, methylsulfonyl, ethylsulfonyl, or the like), an arylsulfonyl group (preferably an arylsulfonyl group having 6 to 22 carbon atoms, for example, benzenesulfonyl or the like), an alkylsilyl group (preferably an alkylsilyl group having 1 to 20 carbon atoms, for example, monomethylsilyl, dimethylsilyl, trimethylsilyl, triethylsilyl, or the like), a phosphorous acid group (preferably a phosphorous acid group having 0 to 20 carbon atoms, for example, $-OP(=O)(OH)(R^P)$), a hypophosphorous acid group (preferably a hypophosphorous acid group having 0 to 20 carbon atoms, for example $-OP(=O)(R^P)_2$), a phosphoryl group (preferably a phosphoryl group having 0 to 20 carbon atoms, for example $-P(=O)(R^P)_2$), a phosphinyl group (preferably a phosphinyl group having 0 to 20 carbon atoms, for example $-P(R^P)_2$), a sulfo group (a sulfonic acid group or $-S(=O)_2(OH)$), a phosphoric acid group ($-OP(=O)(OH)_2$), a phosphonic acid group ($-P(=O)(OH)_2$), a carboxy group, a hydroxy group, a sulfanyl group, a cyano group, and a halogen atom (for example, a fluorine atom, a chlorine atom, a bromine atom, or an iodine atom). $R^P$ is a hydrogen atom or a substituent (preferably a group selected from the substituent group Q).

In addition, each of the groups listed in the substituent group Q may further have the substituent group Q as a substituent.

It is preferable that the water-soluble crosslinked polymer as a binder component constituting the binder composition according to the embodiment of the present invention be less likely to swell in an electrolytic solution, because then the water-soluble crosslinked polymer is inhibited from swelling in the electrolytic solution, which makes it possible to sufficiently maintain the electrode structure and to obtain a long cycle life.

For example, it is preferable that the water-soluble crosslinked polymer satisfy the following <Condition II>.

<Condition II>

A swelling ratio of the water-soluble crosslinked polymer is 1% by mass or more and less than 100% by mass with respect to a mixed solvent obtained by mixing 2 parts by mass of ethyl methyl carbonate with 1 part by mass of ethylene carbonate.

That is, the swelling ratio of the water-soluble crosslinked polymer with respect to a solvent (pseudo-electrolytic solution) obtained by mixing ethylene carbonate with ethyl methyl carbonate at a mass ratio of ethylene carbonate/ethyl methyl carbonate = 1/2 is preferably 1% by mass or more and less than 100% by mass, more preferably 1% by mass or more and less than 50% by mass, even more preferably 1% by mass or more and less than 20% by mass, and particularly preferably 1% by mass or more and less than 10% by mass. Here, in a case where the water-soluble crosslinked polymer does not swell in the solvent, the swelling ratio is 0% by mass. The swelling ratio is determined by the method explained in Examples which will be described later.

In addition, it is preferable that the water-soluble crosslinked polymer as a binder component constituting the binder composition according to the embodiment of the present invention exhibit a certain degree of breaking energy, because then the water-soluble crosslinked polymer expresses characteristics of being able to conform to repeated swelling and contraction of the active material and expresses desired bonding properties, which further increases the cycle life.

The breaking energy of the water-soluble crosslinked polymer is preferably 4.0 to 15.0 MPa, more preferably 4.5 to 13.0 MPa, and even more preferably 4.8 to 11.0 MPa. The breaking energy is measured and calculated by the method explained in Examples which will be described later.

The weight-average molecular weight of the copolymer is preferably 100,000 or more, more preferably 200,000 or more, and even more preferably 300,000 or more. In a case where the weight-average molecular weight of the

copolymer is large enough, excellent bonding properties are obtained in a case where the water-soluble crosslinked polymer obtained by crosslinking the copolymer by using an aziridine compound is used as a binder for a secondary battery, which increases the cycle life of the secondary battery formed using the binder composition containing the water-soluble crosslinked polymer. The upper limit of the weight-average molecular weight is practically 3,000,000 or less, and preferably 2,000,000 or less.

In the present invention, the weight-average molecular weight is a sodium polyacrylate-equivalent weight-average molecular weight determined by gel permeation chromatography (GPC). As the weight-average molecular weight, a value measured by the method of the following measurement condition 1 is adopted. Here, it is possible to select and use an appropriate eluent depending on the sample to be measured.

(Measurement condition 1)

Measuring instrument: HLC-8220GPC (trade name, manufactured by Tosoh Corporation)
Column: TOSOH TSKgel 5000PWXL (trade name, manufactured by Tosoh Corporation), TOSOH TSKgel G4000PWXL (trade name, manufactured by Tosoh Corporation), and TOSOH TSKgel G2500PWXL (trade name, manufactured by Tosoh Corporation) are connected.
Carrier: 200 mM aqueous sodium nitrate solution
Measurement temperature: 40°C
Carrier flow rate: 1.0 mL/min
Sample concentration: 0.2%
Detector: refractive index (RI) detector

In a case where the weight-average molecular weight cannot be measured under the measurement condition 1, such as in a case where the sample to be measured is a polymer having a crosslinked structure, the weight-average molecular weight is measured by static light scattering under the following measurement condition 2.

Measuring instrument: DLS-8000 (trade name, manufactured by OTSUKA ELECTRONICS CO., LTD)
Measurement concentration: 0.25, 0.50, 0.75, 1.00 mg/mL
Solution for dilution: 0.1M aqueous NaCl solution
Laser wavelength: 633 nm
Pinhole: PH1 = Open, PH2 = Slit
Measurement angles: 60, 70, 80, 90, 100, 110, 120, 130 degrees
Analysis method: square root Zimm plot was used to measure molecular weight. dn/dc required for analysis is actually measured with an Abbe refractometer.

The binder composition according to the embodiment of the present invention may contain one kind of the water-soluble crosslinked polymer alone or two or more kinds of the water-soluble crosslinked polymers. It is preferable that the binder composition contain one kind of the water-soluble crosslinked polymer alone.

The binder composition according to the embodiment of the present invention may contain other polymers commonly used as a binder for a battery, in addition to the water-soluble crosslinked polymer. In this case, the weight-average molecular weight of those other polymers is preferably more than 10,000.

Here, the content of the water-soluble crosslinked polymer with respect to the total content of polymers contained in the binder composition according to the embodiment of the present invention is preferably 80% by mass or more, more preferably 90% by mass or more, even more preferably 95% by mass or more, and particularly preferably 99% by mass or more. In addition, the content of the water-soluble crosslinked polymer can also be 100% by mass.

The water-soluble crosslinked polymer can be synthesized by combining monomers leading to the constitutional components depending on the purpose, subjecting the monomers to addition polymerization optionally in the presence of a catalyst (including a polymerization initiator, a chain transfer agent, or the like) such that a copolymer is synthesized, and reacting the obtained copolymer with the aziridine compound such that the copolymer is crosslinked. The method and conditions of the addition polymerization and the method and conditions of the reaction of the aziridine compound are not particularly limited, and appropriately selected from common methods and conditions.

The binder composition according to the embodiment of the present invention contains water. The content of water in the binder composition according to the embodiment of the present invention is not particularly limited, and can be 10% by mass or more for example. The content of water in the binder composition is preferably 20% by mass or more, more preferably 30% by mass or more, even more preferably 40% by mass, and particularly preferably 50% by mass or more. The content of water in the binder composition according to the embodiment of the present invention

may be 60% by mass or more, 70% by mass or more, or 80% by mass or more. The upper limit thereof is not particularly limited, but is practically 95% by mass or less.

The binder composition according to the embodiment of the present invention may contain a liquid medium other than water. Examples of the liquid medium other than water include an organic solvent (hereinafter, called a water-soluble organic solvent) which is miscible with water without going through phase separation in a case where the organic solvent is mixed with water. Preferred examples of the water-soluble organic solvent include N-methylpyrrolidone, methanol, ethanol, acetone, tetrahydrofuran, and the like.

The water-soluble crosslinked polymer which is a binder component may or may not be dissolved in the liquid medium constituting the binder composition according to the embodiment of the present invention.

In the binder composition according to the embodiment of the present invention, the content of the water-soluble crosslinked polymer may be appropriately set depending on the purpose. For example, the content of the water-soluble crosslinked polymer in the binder composition can be set to 2% to 50% by mass, preferably set to 4% to 30% by mass, and more preferably set to 5% to 20% by mass.

The binder composition according to the embodiment of the present invention can contain other components depending on the purpose, in addition to the water-soluble crosslinked polymer, water, and the liquid medium other than water. Examples of those other components include a polyhydric alcohol (an alcohol having two or more hydroxy groups). Here, in a case where the composition contains an active material that allows the ions of a metal, which will be described later, belonging to Group 1 or Group 2 of the periodic table to be inserted into and released from the active material, this composition is not the binder composition according to the embodiment of the present invention but the electrode composition according to an embodiment of the present invention.

In addition, the binder composition according to the embodiment of the present invention can also be prepared by dilution of a synthetic solution of the water-soluble crosslinked polymer, and the like. Therefore, the binder composition according to the embodiment of the present invention may contain the compound which is used in the synthesis of the copolymer and the water-soluble crosslinked polymer or a by-product which is generated after the synthesis reaction.

**Composition for Electrode**

The electrode composition according to an embodiment of the present invention contains the binder composition according to the embodiment of the present invention and an active material that allows the ions of a metal belonging to Group 1 or Group 2 of the periodic table to be inserted into and released from the active material. As necessary, the electrode composition can further contain a conductive auxiliary agent and other additives. The active material may be a positive electrode active material or a negative electrode active material. In a case where the electrode composition contains a positive electrode active material, the electrode composition can be used as a slurry for forming a positive electrode active material layer of a secondary battery. In addition, in a case where the electrode composition contains a negative electrode active material, the electrode composition can be used as a slurry for forming a negative electrode active material layer. The binder composition can be applied to both the composition for a positive electrode and composition for a negative electrode. However, the binder composition is preferably used for a negative electrode, and particularly preferably used for a composition for a negative electrode having a silicon atom-containing active material.

The active material, the conductive auxiliary agent, and other additives are not particularly limited, and may be appropriately selected from active materials, conductive auxiliary agents, and additives that are commonly used for secondary batteries depending on the purpose.

The content of the binder composition according to the embodiment of the present invention in the electrode composition according to the embodiment of the present invention, the content being expressed as a ratio calculated from the amount of solid content constituting each composition (the ratio of the solid content of the binder composition with respect to the solid content of the electrode composition), is preferably 0.5% to 30% by mass, more preferably 1.0% to 20% by mass, even more preferably 1.5% to 15% by mass, and particularly preferably 2.5% to 10% by mass. Typically, the solid content in the binder composition according to the embodiment of the present invention means the binder component (water-soluble crosslinked polymer), and the solid content in the electrode composition according to the embodiment of the present invention means the binder component, the solid particles (the electrode active material, the conductive auxiliary agent, other additives, and the like), and the like.

**Positive electrode active material**

It is preferable that the positive electrode active material allow lithium ions to be reversibly inserted into and released from the positive electrode active material. There is no particular limit on this material as long as it has the characteristics. The positive electrode active material may be a transition metal oxide, an organic substance, an element such as sulfur capable of forming a complex with Li, a sulfur-metal complex, or the like.

As the positive electrode active material, among the above, the transition metal oxide is preferably used, and

the transition metal oxide having a transition metal element $M^a$ (one or more kinds of elements selected from Co, Ni, Fe, Mn, Cu, and V) is more preferable. In addition, the transition metal oxide may be mixed with an element $M^b$ (elements of Group 1 (Ia) and Group 2 (IIa) of the periodic table other than lithium and an element such as Al, Ga, In, Ge, Sn, Pb, Sb, Bi, Si, P, or B). The mixing amount of the element $M^b$ is preferably 0 to 30 mol with respect to 100 mol of the transition metal element $M^a$. A positive electrode active material is more preferable which is synthesized by mixing the transition metal element $M^a$ with Li such that the molar ratio of Li to $M^a$ ($Li/M^a$) is 0.3 to 2.2.

Specific examples of the transition metal oxide include (MA) transition metal oxide having a bedded salt-type structure, (MB) transition metal oxide having a spinel-type structure, (MC) lithium-containing transition metal phosphoric acid compound, (MD) lithium-containing transition metal halide phosphoric acid compound, (ME) lithium-containing transition metal silicic acid compound, and the like.

Specific examples of (MA) transition metal oxide having bedded salt-type structure include $LiCoO_2$ (lithium cobaltate [LCO]), $LiNi_2O_2$ (lithium nickelate), $LiNi_{0.85}Co_{0.10}Al_{0.05}O_2$ (lithium nickel cobalt aluminate [NCA]), $LiNi_{1/3}Co_{1/3}Mn_{1/3}O_2$ (lithium nickel manganese cobaltate [NMC]), and $LiNi_{0.5}Mn_{0.5}O_2$ (lithium manganese nickelate).

Specific examples of (MB) transition metal oxide having a spinel-type structure include $LiMn_2O_4$ (LMO), $LiCoMnO_4$, $Li_2FeMn_3O_8$, $Li_2CuMn_3O_8$, $Li_2CrMn_3O_8$, and $Li_2NiMn_3O_8$.

Examples of (MC) lithium-containing transition metal phosphoric acid compound include an olivine-type iron phosphate salts such as $LiFePO_4$ and $Li_3Fe_2(PO_4)_3$, iron pyrophosphates such as $LiFeP_2O_7$, cobalt phosphates such as $LiCoPO_4$, and monoclinic NASICON-type vanadium phosphate such as $Li_3V_2(PO_4)_3$ (lithium vanadium phosphate).

Examples of (MD) lithium-containing transition metal halide phosphoric acid compound include iron fluorophosphate such as $Li_2FePO_4F$, manganese fluorophosphate such as $Li_2MnPO_4F$, and cobalt fluorophosphate such as $Li_2CoPO_4F$.

Examples of (ME) lithium-containing transition metal silicic acid compound include $Li_2FeSiO_4$, $Li_2MnSiO_4$, $Li_2CoSiO_4$, and the like.

In the present invention, (MA) transition metal oxide having a bedded salt-type structure is preferable, and LCO or NMC is more preferable.

Although the shape of the positive electrode active material is not particularly limited, it is preferable that the positive electrode active material be in the form of particles. The average particle diameter (equivalent spherical average particle diameter) of the positive electrode active material is not particularly limited. For example, the average particle diameter can be set to 0.1 to 50 $\mu$m. The positive electrode active material having a predetermined particle diameter may be prepared by the conventional method by using a pulverizer or a classifier. The method of adjusting the particle diameter of the negative electrode active material to a predetermined size, which will be described later, can also be used. The positive electrode active material obtained by a baking method may be used after being washed with water, an acidic aqueous solution, an alkaline aqueous solution, an organic solvent, or the like.

One kind of the positive electrode active material may be used alone, or two or more kinds of the positive electrode active materials may be used in combination.

In forming the positive electrode active material layer, there is no particular limit on the mass (mg) (weight) of the positive electrode active material per unit area ($cm^2$) of the positive electrode active material layer. The mass of the positive electrode active material can be appropriately determined depending on the designed battery capacity.

There is no particular limit on the content of the positive electrode active material in the electrode composition according to an embodiment of the present invention. The content of the positive electrode active material with respect to the amount of the total solid content is preferably 10% to 99% by mass, more preferably 30% to 98% by mass, even more preferably 50% to 97% by mass, and particularly preferably 55% to 95% by mass.

**Negative electrode active material**

It is preferable that the negative electrode active material can reversibly absorb and release lithium ions. There is no particular limit on the material as long as it has the above characteristics. Examples of the material include a carbonaceous material, a silicon-based material (meaning a material containing a silicon atom), a metal oxide, a metal composite oxide, simple lithium, a lithium alloy, a negative electrode active material capable of forming an alloy with lithium, and the like. Among these, in view of reliability, the carbonaceous material or the silicon-based material is preferably used.

The carbonaceous material used as the negative electrode active material is a material that substantially consists of carbon. Examples of the carbonaceous material include carbon black such as petroleum pitch, graphite (natural graphite such as flake graphite and lump graphite, artificial graphite such as vapor phase-grown graphite and fibrous graphite, expandable graphite, and the like), activated carbon, carbon fibers, cokes, soft carbon, hard carbon, and carbonaceous materials obtained by baking various synthetic resins such as polyacrylonitrile (PAN)-based resins or furfuryl alcohol resins. Examples of the carbonaceous material also include various carbon fibers such as PAN-based carbon fibers, cellulose-based carbon fibers, pitch-based carbon fibers, vapor phase-grown carbon fibers, dehydrated

polyvinyl alcohol (PVA)-based carbon fibers, lignin carbon fibers, glassy carbon fibers, and activated carbon fibers, mesophase microspheres, graphite whisker, flat plate-like graphite, and the like.

The metal oxide and the metal composite oxide used as the negative electrode active material are not particularly limited as long as they are oxides capable of absorbing and releasing lithium, and are preferably amorphous oxides. Preferred examples thereof also include chalcogenide which is a reaction product of a metal element and a Group 16 element of the periodic table. "Amorphous" mentioned herein means that the oxide is found to have a broad scattering band having a peak in a region of 20° to 40° at the angle of 2θ by the X-ray diffraction method using CuKα radiation. The amorphous oxide may have a diffraction line showing crystallinity.

In the group of compounds consisting of the amorphous oxide and the chalcogenide, an amorphous oxide of a semi-metal element and the chalcogenide are more preferable, elements of Group 13 (IIIB) to Group 15 (VB) of the periodic table, an oxide consisting of one kind of element among Al, Ga, Si, Sn, Ge, Pb, Sb, and Bi alone or consisting of a combination of two or more kinds of these elements, or chalcogenide is particularly preferable. Specific examples of preferred amorphous oxide and chalcogenide include $Ga_2O_3$, GeO, PbO, $PbO_2$, $Pb_2O_3$, $Pb_2O_4$, $Pb_3O_4$, $Sb_2O_3$, $Sb_2O_4$, $Sb_2O_8Bi_2O_3$, $Sb_2O_8Si_2O_3$, $Sb_2O_5$, $Bi_2O_3$, $Bi_2O_4$, GeS, PbS, $PbS_2$, $Sb_2S_3$, and $Sb_2S_5$.

From the viewpoint of charge and discharge characteristics at a high current density, it is preferable that the metal (composite) oxide and the chalcogenide contain at least one of titanium or lithium as a constitutional component. Examples of the lithium-containing metal composite oxide (lithium composite metal oxide) include a composite oxide of lithium oxide and the metal (composite) oxide or the chalcogenide, and more specifically include $Li_2SnO_2$.

It is also preferable that the negative electrode active material contain a titanium atom. More specifically, $TiNb_2O_7$ (niobium titanium oxide [NTO]) and $Li_4Ti_5O_{12}$ (lithium titanate [LTO]) that go through a slight volume change in absorbing and releasing lithium ions are preferable, because these exhibit excellent high-speed charge and discharge characteristics, suppress the deterioration of an electrode, and can increase the life of a lithium ion secondary battery.

The lithium alloy as the negative electrode active material is not particularly limited as long as it is an alloy normally used as a negative electrode active material of a secondary battery. Examples of the lithium alloy include a lithium-aluminum alloy.

The negative electrode active material that can form an alloy with lithium is not particularly limited as long as it is commonly used as a negative electrode active material of a secondary battery. Such an active material expands and contracts much by charge and discharge. Therefore, as described above, in the general case, the bonding properties between solid particles or between solid particles and a collector deteriorate. However, in the present invention, because the water-soluble crosslinked polymer functions as a binder, the bonding properties can be further improved. Examples of such an active material include a negative electrode active material having a silicon atom or a tin atom, and metals such as Al and In. The active material is preferably a negative electrode active material having a silicon atom (silicon atom-containing active material) making it possible to achieve a higher battery capacity, and more preferably the silicon atom-containing active material in which the content of the silicon atom is 40 mol% or more with respect to the total content of constituent atoms.

Usually, a negative electrode containing these negative electrode active materials (for example, a Si negative electrode containing a silicon atom-containing active material and a Sn negative electrode containing an active material having a tin atom) can absorb more Li ions, compared to a negative electrode (such as graphite or carbon black) consisting of only a carbonaceous material. That is, the Li ion absorption capacity per unit mass increases. Therefore, the battery capacity (energy density) can be increased. As a result, an advantage of being able to increase battery driving time can be obtained. The negative electrode active material having a silicon atom or a tin atom as described above is also called a high-capacity active material.

Examples of the silicon atom-containing active material include a silicon material such as Si and SiOx ($0 < x \leq 1$), an alloy containing titanium, vanadium, chromium, manganese, nickel, copper, or lanthanum (for example, $LaSi_2$ or $VSi_2$), a structured active material (for example, $LaSi_2$/Si), an active material containing a silicon atom and a tin atom, such as $SnSiO_3$ and $SnSiS_3$, and the like. It should be noted that SiOx itself can be used as a negative electrode active material (semi-metal oxide) and generates Si as the battery is operated. Accordingly, SiOx can be used as an active material (a precursor material thereof) capable of being alloyed with lithium.

Examples of the negative electrode active material having a tin atom include Sn, SnO, $SnO_2$, SnS, $SnS_2$, the active material containing a silicon atom and a tin atom, and the like. In addition, examples thereof include a composite oxide with lithium oxide, for example, $Li_2SnO_2$.

Although the shape of the negative electrode active material is not particularly limited, it is preferable that the negative electrode active material be in the form of particles. The average particle diameter of the negative electrode active material is preferably 0.1 to 60 μm. The negative electrode active material having a predetermined particle diameter can be prepared by the conventional method by using a pulverizer or a classifier. For example, a mortar, a ball mill, a sand mill, a vibratory ball mill, a satellite ball mill, a planetary ball mill, a vortex airflow-type jet mill, a sieve, or the like is suitably used. The negative electrode active material can also be pulverized by wet pulverization in which water or an organic solvent such as methanol coexists. In order to obtain a desired diameter, it is preferable to perform classification.

The classification method is not particularly limited, and a sieve, an air classifier, or the like can be used as desired. Both the dry classification and wet classification can be used.

One kind of the negative electrode active material may be used alone, or two or more kinds of the negative electrode active materials may be used in combination. Among these, a combination of a silicon atom-containing active material and a carbonaceous material is preferable, and a combination of SiOx ($0 < x \leq 1$) and graphite is particularly preferable. In a case where SiOx ($0 < x \leq 1$) and graphite are combined, the mass ratio of SiOx to graphite (SiOx/graphite) is preferably 2 or less, more preferably 1 or less, and even more preferably 0.5 or less. The lower limit of the mass ratio of SiOx to graphite is not particularly limited, and is practically 0.05 or more.

In forming the negative electrode active material layer, there is no particular limit on the mass (mg) (weight) of the negative electrode active material per unit area ($cm^2$) of the negative electrode active material layer. The mass of the negative electrode active material can be appropriately determined depending on the designed battery capacity.

There is no particular limit on the content of the negative electrode active material in the electrode composition according to the embodiment of the present invention. The content of the negative electrode active material with respect to the amount of the total solid content is preferably 10% to 99% by mass, more preferably 30% to 98% by mass, even more preferably 50% to 97% by mass, and particularly preferably 55% to 95% by mass.

The chemical formula of the compound obtained by the baking method can be measured by the method of inductively coupled plasma (ICP) emission spectrometry, and can be calculated by a simple method of determining a difference in mass between powder before baking and powder after baking.

In the present invention, in a case where the negative electrode active material layer is formed by battery charging, instead of the negative electrode active material, it is possible to use ions of a metal belonging to Group 1 or Group 2 of the periodic table generated in the secondary battery. Bonding the ions to electrons and precipitating the ions as a metal make it possible to form the negative electrode active material layer.

**Coating of active material**

The surface of the positive electrode active material and negative electrode active material may be coated with another metal oxide. Examples of the surface coating agent include a metal oxide containing Ti, Nb, Ta, W, Zr, Al, Si, or Li. Specific examples thereof include spinel titanate, a tantalum-based oxide, a niobium-based oxide, a lithium niobate-based compound, and the like. More specifically, examples thereof include $Li_4Ti_5O_{12}$, $Li_2Ti_2O_5$, $LiTaO_3$, $LiNbO_3$, $LiAlO_2$, $Li_2ZrO_3$, $Li_2WO_4$, $Li_2TiO_3$, $Li_2B_4O_7$, $Li_3PO_4$, $Li_2MoO_4$, $Li_3BO_3$, $LiBO_2$, $Li_2CO_3$, $Li_2SiO_3$, $SiO_2$, $TiO_2$, $ZrO_2$, $Al_2O_3$, $B_2O_3$, and the like.

In addition, the surface of the electrode containing the positive electrode active material or negative electrode active material may be treated with sulfur or phosphorus.

Furthermore, the surface of the particles of the positive electrode active material or negative electrode active material may be treated with an actinic ray or an active gas (such as plasma) before and after being coated as above.

**Conductive auxiliary agent**

The electrode composition according to the embodiment of the present invention can also contain a conductive auxiliary agent. It is particularly preferable that the silicon atom-containing active material as the negative electrode active material be used in combination with the conductive auxiliary agent.

The conductive auxiliary agent is not particularly limited, and those known as a general conductive auxiliary agent can be used. For example, the conductive auxiliary agent may be electron conducting materials including carbon blacks such as acetylene black, ketjen black, and furnace black, amorphous carbon such as needle cokes, carbon fibers such as vapor phase-grown carbon fibers or carbon nanotubes, or a carbonaceous material such as graphene or fullerene or may be metal powder such as copper or nickel and metal fibers, and conductive polymers such as polyaniline, polypyrrole, polythiophene, polyacetylene, and a polyphenylene derivative may be used.

In the present invention, in a case where the active material and the conductive auxiliary agent are used in combination, among the above conductive auxiliary agents, a material which does not allow Li to be inserted into and released from the material in a case where the battery is charged and discharged and does not function as an active material is used as a conductive auxiliary agent. Therefore, among the conductive auxiliary agents, those capable of functioning as an active material in the active material layer in a case where the battery is charged or discharged are classified not as a conductive auxiliary agent but as an active material. Whether or not the conductive auxiliary agent functions as an active material in a case where the battery is charged and discharged is indefinite and is determined by the combination with an active material.

One kind of conductive auxiliary agent or two or more kinds of conductive auxiliary agents may be used.

The content of the conductive auxiliary agent in the electrode composition according to the embodiment of the present invention with respect to the amount of total solid content of the electrode composition is preferably 0.5% to

60% by mass, more preferably 1.0% to 50% by mass, even more preferably 1.5% to 40% by mass, and particularly preferably 2.5% to 35% by mass.

Although the shape of the conductive auxiliary agent is not particularly limited, it is preferable that the conductive auxiliary agent be in the form of particles. The median diameter D50 of the conductive auxiliary agent is not particularly limited and is, for example, preferably 0.01 to 50 μm and more preferably 0.02 to 10.0 μm.

**Other additives**

As desired, the electrode composition according to the embodiment of the present invention can contain, as components other than the above components, a lithium salt, an ionic liquid, a thickener, an antifoaming agent, a leveling agent, a dehydrating agent, an antioxidant, and the like.

Regarding the active material, the conductive auxiliary agent, and other additives, for example, WO2019/203334A, JP2015-46389A, and the like can be referred to.

**Solvent**

The electrode composition according to the embodiment of the present invention contains water as a solvent and may contain a liquid medium other than water. As the liquid medium other than water, for example, the description of the liquid medium other than water in the binder composition according to the embodiment of the present invention can be applied.

The water-soluble crosslinked polymer as a binder component may or may not be dissolved in the liquid medium constituting the electrode composition according to the embodiment of the present invention, as long as the solid particles, such as the electrode active material and the conductive auxiliary agent, in the electrode composition according to the embodiment of the present invention are dispersed in the water-soluble crosslinked polymer.

The content of the solvent in the electrode composition according to the embodiment of the present invention can be adjusted to, for example, 10% to 90% by mass, and is preferably set to 20% to 80% by mass and more preferably set to 30% to 70% by mass.

**Electrode sheet**

The electrode sheet according to an embodiment of the present invention has a layer composed of the electrode composition according to the embodiment of the present invention (the electrode active material layer, that is, the negative electrode active material layer or the positive electrode active material layer). The electrode sheet according to the embodiment of the present invention may be an electrode sheet having an electrode active material layer. The electrode sheet may be a sheet composed of a substrate such as a collector and an electrode active material layer formed on the substrate or a sheet formed of only an electrode active material layer (the negative electrode active material layer or the positive electrode active material layer) without a substrate. The electrode sheet is usually a sheet composed of a collector and an electrode active material layer laminated thereon, and the density of the electrode mixture is not particularly limited and can be set to, for example, 1.4 to 1.6 $g/cm^3$. The electrode sheet according to the embodiment of the present invention may have, for example, a protective layer such as a peeling sheet and a coating layer as other layers.

The electrode sheet according to the embodiment of the present invention can be suitably used as a material constituting the negative electrode active material layer or the positive electrode active material layer of the secondary battery.

**Production method for electrode sheet**

The electrode sheet according to the embodiment of the present invention can be obtained by forming an electrode active material layer by using the electrode composition according to the embodiment of the present invention. For example, by forming a film with the electrode composition according to the embodiment of the present invention, it is possible to manufacture the electrode sheet according to the embodiment of the present invention. Specifically, by coating a substrate such as a collector with the electrode composition according to the embodiment of the present invention (the substrate may be coated via another layer) to form a coating film and drying the coating film, it is possible to obtain an electrode sheet composed of a substrate and an active material layer (coated and dried layer) thereon.

In addition, the secondary battery according to an embodiment of the present invention can be obtained by incorporating the electrode sheet obtained by the production method for an electrode sheet into an electrode of a secondary battery.

## Secondary battery

The secondary battery according to the embodiment of the present invention generally means a device in which ions pass between positive and negative electrodes through an electrolyte by charge and discharge, and energy is stored in and released from the positive and negative electrodes. That is, in the present invention, "secondary battery" has a meaning including both the battery and capacitor (for example, a lithium ion capacitor). From the viewpoint of energy storage, it is preferable that the secondary battery according to the embodiment of the present invention be used as a battery (instead of being used as a capacitor).

As the secondary battery according to the embodiment of the present invention, a non-aqueous electrolytic solution secondary battery will be described for example. However, the secondary battery according to the embodiment of the present invention is not limited to the non-aqueous electrolytic solution secondary battery, and includes a wide variety of secondary batteries in general including all-solid state secondary batteries.

The non-aqueous electrolytic solution secondary battery as a preferred embodiment of the present invention is composed of a positive electrode, a negative electrode, and a separator disposed between the positive electrode and the negative electrode. The positive electrode has a positive electrode collector and a positive electrode active material layer in contact with the positive electrode collector, and the negative electrode has a negative electrode collector and a negative electrode active material layer in contact with the negative electrode collector. In the non-aqueous electrolytic solution secondary battery according to the embodiment of the present invention, at least one of the positive electrode active material layer or the negative electrode active material layer is composed of the electrode composition according to the embodiment of the present invention. Filling the space between the positive electrode and the negative electrode with a non-aqueous electrolytic solution allows the non-aqueous electrolytic solution secondary battery according to the embodiment of the present invention to function as a secondary battery by charge and discharge.

Fig. 1 is a schematic cross-sectional view showing the laminated structure of a general non-aqueous electrolytic solution secondary battery 10, including a working electrode that acts in a case where the battery is operated. The non-aqueous electrolytic solution secondary battery 10 has a laminated structure having a negative electrode collector 1, a negative electrode active material layer 2, a separator 3, a positive electrode active material layer 4, and a positive electrode collector 5 that are laminated in this order from the negative electrode side. The space between the negative electrode active material layer and the positive electrode active material layer is filled with a non-aqueous electrolytic solution (not shown in the drawing), and the negative and positive electrode active material layers are separated by the separator 3. The separator 3 has pores, and functions as a positive/negative electrode separation membrane that insulates the positive and negative electrodes from each other while allowing the permeation of the electrolytic solution and ions into the pores in a state where the battery is normally used. Due to such a structure, for example, in the case of lithium ion secondary battery, during charge, while electrons ($e^-$) are being supplied to the negative electrode side through an external circuit, lithium ions ($Li^+$) move from the positive electrode through the electrolytic solution and are accumulated in the negative electrode. On the other hand, during discharge, while the lithium ions ($Li^+$) accumulated in the negative electrode are returning to the positive electrode side via the electrolytic solution, electrons are supplied to an operation portion 6. In the example shown in the drawing, a light bulb is adopted as the operation portion 6, which is turned on by discharge.

In the present invention, the negative electrode collector 1 and the negative electrode active material layer 2 are collectively called a negative electrode, and the positive electrode active material layer 4 and the positive electrode collector 5 are collectively called a positive electrode.

The materials, the non-aqueous electrolytic solution, the members, and the like used in the non-aqueous electrolytic solution secondary battery are not particularly limited, except that the binder composition or the electrode composition according to the embodiment of the present invention is used to form a specific layer. As these materials, members, and the like, those used for general non-aqueous electrolytic solution secondary batteries can be appropriately used. In addition, as the production method of the non-aqueous electrolytic solution secondary battery, a conventional method that goes through the production of an electrode sheet can be appropriately adopted, except that a specific layer is formed using the binder composition or the electrode composition according to the embodiment of the present invention. For example, JP2016-201308A, JP2005-108835A, JP2012-185938A, and the like can be appropriately referred to.

Preferred forms of the non-aqueous electrolytic solution will be more specifically described.

## Electrolyte

The electrolyte used in the non-aqueous electrolyte solution is preferably a salt of a metal ion belonging to Group 1 or Group 2 of the periodic table. The salt of the metal ion to be used is appropriately selected depending on the purpose of use of the non-aqueous electrolyte solution. Examples thereof include a lithium salt, a potassium salt, a sodium salt, a calcium salt, a magnesium salt, and the like. In a case where the salt is used in a secondary battery or the like, from the viewpoint of output, the lithium salt is preferable. In a case where the non-aqueous electrolytic solution

according to the embodiment of the present invention is used as a non-aqueous electrolytic solution for a lithium ion secondary battery, a lithium salt may be selected as the salt of the metal ion. As the lithium salt, a lithium salt generally used as an electrolyte of a non-aqueous electrolytic solution for a lithium ion secondary battery is preferable, and examples thereof include the following lithium salts.

(L-1) Inorganic lithium salt: inorganic fluoride salt such as $LiPF_6$, $LiBF_4$, $LiAsF_6$, or $LiSbF_6$, perhalogenate such as $LiClO_4$, $LiBrO_4$, or $LiIO_4$, inorganic chloride salt such as $LiAlCl_4$, and the like

(L-2) Fluorine-containing organic lithium salt: perfluoroalkane sulfonate such as $LiCF_3SO_3$, perfluoroalkane sulfonyl imide salt such as $LiN(CF_3SO_2)_2$, $LiN(CF_3CF_2SO_2)_2$, $LiN(FSO_2)_2$, or $LiN(CF_3SO_2)(C_4F_9SO_2)$, perfluoroalkane sulfonyl methide salt such as $LiC(CF_3SO_2)_3$, perfluoroalkyl fluorophosphate such as $Li[PF_5(CF_2CF_2CF_3)]$, $Li[PF_4(CF_2CF_2CF_3)_2]$, $Li[PF_3(CF_2CF_2CF_3)_3]$, $Li[PF_5(CF_2CF_2CF_2CF_3)]$, $Li[PF_4(CF_2CF_2CF_2CF_3)_2]$, $Li[PF_3(CF_2CF_2CF_2CF_3)_3]$, and the like

(L-3) Oxalatoborate salt: lithium bis(oxalato)borate, lithium difluorooxalatoborate, and the like

Among these, $LiPF_6$, $LiBF_4$, $LiAsF_6$, $LiSbF_6$, $LiClO_4$, $Li(R^{f1}SO_3)$, $LiN(R^{f1}SO_2)_2$, $LiN(FSO_2)_2$, and $LiN(R^{f1}SO_2)(R^{f2}SO_2)$ are preferable, and $LiPF_6$, $LiBF_4$, and lithium imide salts such as $LiN(R^{f1}SO_2)_2$, $LiN(FSO_2)_2$, and $LiN(R^{f1}SO_2)(R^{f2}SO_2)$ are more preferable. Here, $R^{f1}$ and $R^{f2}$ each represent a perfluoroalkyl group.

It should be noted that as the electrolyte used in the non-aqueous electrolytic solution, one kind of electrolyte may be used alone, or two or more kinds of electrolytes may be arbitrarily combined.

The salt concentration of the electrolyte (preferably an ion of a metal belonging to Group 1 or Group 2 of the periodic table or a metal salt thereof) in the non-aqueous electrolytic solution is appropriately selected depending on the purpose of use of the non-aqueous electrolyte solution. The salt concentration with respect to the total mass of the non-aqueous electrolytic solution is generally 10% to 50% by mass, and more preferably 15% to 30% by mass. The molar concentration thereof is preferably 0.5 to 1.5 M. It should be noted that in a case where the salt concentration is evaluated as an ion concentration, the concentration may be calculated in terms of a salt with a suitably used metal.

**Non-aqueous solvent**

The non-aqueous electrolytic solution contains a non-aqueous solvent.

As the non-aqueous solvent, aprotic organic solvents are preferable. Among these, an aprotic organic solvent having 2 to 10 carbon atoms is more preferable.

Examples of such a non-aqueous solvent include a chainlike or cyclic carbonate compound, a lactone compound, a chainlike or cyclic ether compound, an ester compound, a nitrile compound, an amide compound, an oxazolidinone compound, a nitro compound, a chainlike or cyclic sulfone or sulfoxide compound, and a phosphoric acid ester.

It should be noted that a compound having an ether bond, a carbonyl bond, an ester bond, or a carbonate bond is preferable. These compounds may have a substituent, and examples thereof include a substituent selected from the substituent group Q.

Examples of the non-aqueous solvent include ethylene carbonate, fluorinated ethylene carbonate, vinylene carbonate, propylene carbonate, butylene carbonate, dimethyl carbonate, diethyl carbonate, ethyl methyl carbonate, methyl propyl carbonate, $\gamma$-butyrolactone, $\gamma$-valerolactone, 1,2-dimethoxyethane, tetrahydrofuran, 2-methyltetrahydrofuran, tetrahydropyran, 1,3-dioxolane, 4-methyl-1,3-dioxolane, 1,3-dioxane, 1,4-dioxane, methyl acetate, ethyl acetate, methyl propionate, ethyl propionate, methyl butyrate, methyl isobutyrate, methyl trimethyl acetate, ethyl trimethyl acetate, acetonitrile, glutaronitrile, adiponitrile, methoxyacetonitrile, 3-methoxypropionitrile, N,N-dimethylformamide, N-methylpyrrolidinone, N-methyloxazolidinone, N,N'-dimethylimidazolidinone, nitromethane, nitroethane, sulfolane, trimethyl phosphate, dimethylsulfoxide, dimethylsulfoxide phosphoric acid, and the like. One kind of each of these may be used alone, or two or more kinds of these may be used in combination. Among these, at least one kind of compound in the group consisting of ethylene carbonate, propylene carbonate, dimethyl carbonate, diethyl carbonate, ethyl methyl carbonate, and $\gamma$-butyrolactone is preferable. Particularly, a combination of a high-viscosity (high-dielectric constant) solvent (for example, dielectric constant $\varepsilon \geq 30$) such as ethylene carbonate or propylene carbonate and a low-viscosity solvent (for example, viscosity $\leq 1$ mPa·s) such as dimethyl carbonate, ethyl methyl carbonate, or diethyl carbonate is more preferable. Using a mixed solvent having such a combination improves the dissociation properties of electrolyte salts and the mobility of ions.

It should be noted that the non-aqueous solvent used in the present invention is not limited to these.

The secondary battery according to the embodiment of the present invention can be installed, for example, electronic apparatuses such as a laptop computer, a pen input computer, a mobile computer, an electronic book player, a mobile phone, a cordless phone handset, a pager, a handy terminal, a mobile fax, a mobile copy machine, a mobile printer, headphone stereo equipment, and a video camera, a liquid crystal television, a handy cleaner, a portable CD, mini-discs, an electric shaver, a transceiver, an electronic notebook, a calculator, a memory card, a portable tape recorder,

a radio, and a backup power supply. In addition, the secondary battery according to the embodiment of the present invention can be installed in an automobile, an electric vehicle, a motor, a lighting device, a toy, a game machine, a road conditioner, a watch, a strobe, a camera, a medical device (such as a pacemaker, a hearing aid, or a shoulder massager), or the like) for consumer use. In addition, the secondary battery according to the embodiment of the present invention can also be combined with a solar cell.

Examples

Hereinafter, the present invention will be more specifically described based on Examples. The materials, amounts used, ratios, details of treatments, treatment procedures, and the like shown in the following Examples can be appropriately changed unless the changes depart from the gist of the present invention. Therefore, the scope of the present invention is not interpreted as being limited to the following Examples.

In the following Examples, unless otherwise specified, "parts" and "%" representing the composition are based on mass.

**(1) Synthesis of Binder B-1**

Distilled water (260.0 g) was added to a three-neck flask having a volume of 1 L provided with a reflux condenser and a gas introduction cock. A nitrogen gas was introduced into the flask at a flow rate of 200 mL/min for 60 minutes, and then the flask was heated up to 75°C. In another container, 5.4 g of acrylic acid, 48.6 g of hydroxyethyl acrylate, 80.0 g of distilled water, and 0.46 g of VA-057 (trade name, water-soluble azo polymerization initiator, manufactured by FUJIFILM Wako Pure Chemical Corporation) were stirred, thereby preparing a mixed solution A.

The mixed solution A prepared above was added dropwise to the three-neck flask for 1 hour. After dropwise addition finished, stirring was continued at 75°C for 3 hours. Then, the mixture was cooled in an ice bath, and 5.00 g of a 48% aqueous sodium hydroxide solution was added thereto. Thereafter, 171.54 g of distilled water was added thereto. Subsequently, a solution obtained by diluting 1.0 g of CHEMITITE PZ-33 (trade name, aziridine compound, manufactured by NIPPON SHOKUBAI CO., LTD.) with 9.0 g of distilled water was added thereto, thereby obtaining an aqueous solution of a binder B-1 having a concentration of solid contents of 10.0% by mass. It should be noted that the copolymer not yet being crosslinked by the aziridine compound had a weight-average molecular weight of 331,000 and a degree of neutralization of 80 mol%.

**Measurement of acid value (degree of neutralization)**

As a sample, approximately 10 g of the aqueous solution of the binder prepared as above was precisely weighed, and 150 mL of water was added thereto to dissolve the binder, thereby preparing a sample solution. The sample solution was subjected to potentiometric titration using a titration solution under the following measurement conditions, and an acid value (degree of neutralization) was calculated using the following equation. It should be noted that a blank test was carried out using 150 mL of water instead of the sample solution.

$$\text{Acid value (mgKOH/g)} = \{(V - B) \times f \times 0.1 \times 56.11\}/(W \times \text{concentration of solid contents} \times 0.01)$$

In the above equation, V represents the titration amount (mL) of the titration solution with respect to the sample solution, f represents the titer of the titration solution, B represents the titration amount (mL) of the titration solution in the blank test, and W represents the amount (g) of the collected sample. In addition, the concentration of solid contents means the concentration of solid contents (% by mass) of the sample.

(Measurement conditions)

Measuring device: automatic titrator GT-100 (trade name, manufactured by Nittoseiko Analytech Co., Ltd.)
Reference electrode: double junction-type Ag/AgCl reference electrode
(Internal solution: 1 mol/L aqueous potassium chloride solution,
external solution: 1 mol/L aqueous potassium nitrate solution)
Indicator electrode: glass electrode

Titration solution: 0.1 mol/L aqueous potassium hydroxide solution

### (2) Synthesis of binders B-2 to B-10, BC-1 to BC-3, and BC-5

Aqueous solutions of binders B-2 to B-10, BC-1 to BC-3, and BC-5 were prepared in the same manner as in the synthesis of the binder B-1, except that the monomer component, the neutralizing agent, and the crosslinking agent were changed as shown in the following Table 1. In all of the aqueous solutions, the concentration of solid contents was 10.0% by mass. The degree of neutralization and the weight-average molecular weight (Mw) of the polymer not yet being crosslinked are as shown in the following Table 1.

### (3) Synthesis of binder BC-4

A binder BC-4 was synthesized as below, based on the synthesis method described in JP2016-528357A.

A monomer mixture composed of 58 g of n-butyl acrylate, 40 g of methoxyethyl acrylate, and 2 g of hydroxybutyl acrylate, 0.02 g of n-dodecanethiol as a chain transfer agent, and 150 g of ethyl acetate as a solvent were put in a reactor having a volume of 1,000 cc equipped with a cooling device in which a nitrogen gas reflux is formed to make it easy to control temperature. Thereafter, in order to remove oxygen, nitrogen gas purging was carried out at 60°C for 60 minutes, and then the temperature was kept at 60°C. After the mixture was made homogeneous, 0.04 g of azobisisobutyronitrile was added as a reaction initiator. The mixture was reacted for 8 hours. Subsequently, a solution obtained by diluting 2.0 g of CHEMITITE PZ-33 (trade name, an aziridine compound, manufactured by NIPPON SHOKUBAI CO., LTD.) with 18.0 g of ethyl acetate was added thereto, thereby obtaining an ethyl acetate solution of the binder BC-4.

The structures of the binders B-1 to B-10 and BC-1 to BC-5 are shown below.

B-1

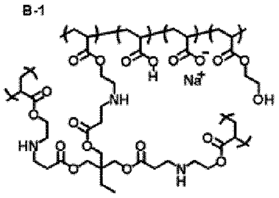

B-6

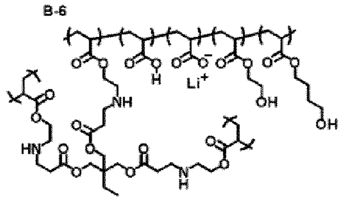

BC-1

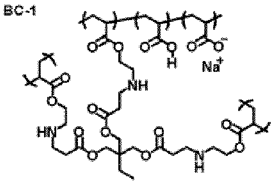

B-2

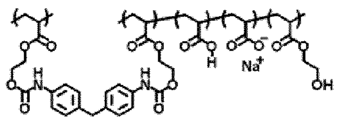

B-7

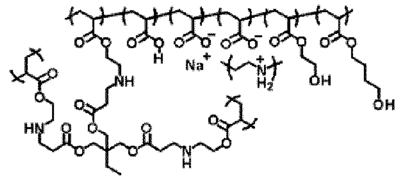

BC-2

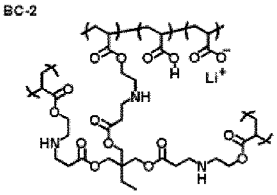

B-3

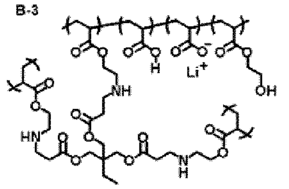

B-8

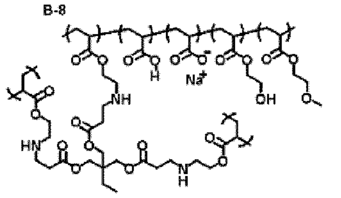

BC-3

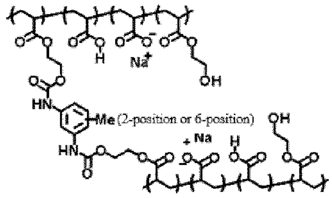


B-4

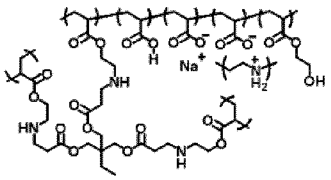

B-9

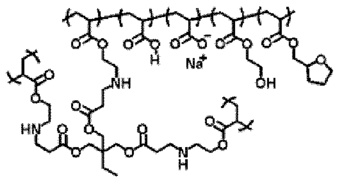

BC-4

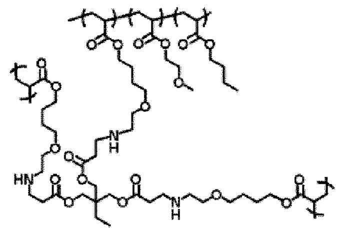

B-5

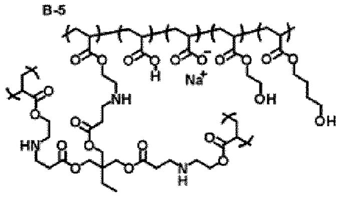

B-10

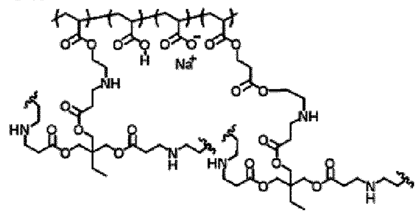

BC-5

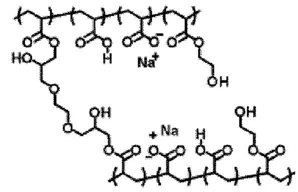

**Weight-average molecular weight**

The weight-average molecular weight of the binders prepared as above is a sodium polyacrylate-equivalent weight-average molecular weight determined by gel permeation chromatography (GPC). The weight-average molecular weight is a value measured under the following conditions.

Measuring instrument: HLC-8220GPC (trade name, manufactured by Tosoh Corporation)
Column: TOSOH TSKgel 5000PWXL (trade name, manufactured by Tosoh Corporation), TOSOH TSKgel G4000PWXL (trade name, manufactured by Tosoh Corporation), and TOSOH TSKgel G2500PWXL (trade name, manufactured by Tosoh Corporation) were connected.
Carrier: 200 mM aqueous sodium nitrate solution
Measurement temperature: 40°C
Carrier flow rate: 1.0 mL/min
Sample concentration: 0.2% by mass
Detector: refractive index (RI) detector

The weight-average molecular weights of the binders B-4 and B-7 could not be measured under the above measurement conditions. Therefore, they were measured by static light scattering under the following conditions.

Measuring instrument: DLS-8000 (trade name, manufactured by OTSUKA ELECTRONICS CO., LTD)
Measurement concentration: 0.25, 0.50, 0.75, 1.00 mg/mL
Solution for dilution: 0.1M aqueous NaCl solution
Laser wavelength: 633 nm
Pinhole: PH1 = Open, PH2 = Slit
Measurement angles: 60, 70, 80, 90, 100, 110, 120, 130 degrees
Analysis method: square root Zimm plot was used to measure molecular weight. dn/dc required for analysis was actually measured with an Abbe refractometer.

**Glass transition temperature**

As the glass transition temperature (Tg) of the homopolymer of the monomer component that leads to each constitutional component of the copolymer, the value of glass transition temperature in the table in Chapter 36 of POLYMER HANDBOOK, 4th edition was adopted. It should be noted that in a case where the glass transition temperature is not described in the document, a value measured under the following measurement conditions was adopted. It should be noted that a homopolymer having a number-average molecular weight of 10,000 to 50,000 was used as a measurement sample.

**Measurement of glass transition temperature**

The glass transition temperature (Tg) was measured under the following measurement conditions by using a dry sample of the homopolymer and a differential scanning calorimeter: X-DSC7000 (trade name, manufactured by SII NanoTechnology Inc.). Tg was measured twice by using the same sample, and the secondly measured Tg was adopted.

(Measurement conditions)
Atmosphere in measurement chamber: nitrogen gas (50 mL/min)
Rate of temperature rise: 5°C/min
Measurement start temperature: -80°C
Measurement end temperature: 250°C
Sample pan: Aluminum pan
Mass of measurement sample: 5 mg
Calculation of Tg: the average of a temperature at which the baseline of the DSC chart starts to change as glass transition proceeds (falling start point) and a temperature at which signals return to the baseline (falling end point) is rounded off to the nearest whole number to calculate Tg.

**Test Example 1 Evaluation of swelling ratio to simulated electrolytic solution**

The binder solution prepared as above was placed on a SUS plate and dried at 50°C for 6 hours, and then the binder film was peeled off from the SUS plate. The obtained binder film was dried at 150°C under vacuum conditions (10 Torr or less) for 6 hours, and then thoroughly dried such that the solvent was removed. Each binder film having undergone drying was weighed in 0.10 g in a glass bottle, 1.90 g of a solvent prepared by mixing ethylene carbonate/ethyl methyl carbonate at a mass ratio of 1/2 was added thereto as a simulated electrolytic solution, followed by heating for 24 hours at 60°C. The binder film having undergone heating was taken out of the glass bottle, and a mass Ws thereof was measured. The binder film was dried under a vacuum condition (10 Torr or less) at 150°C for 5 hours, and then a mass Wd was measured again. The obtained values of Ws and Wd were plugged into the following equation to calculate the swelling ratio. The results are shown in Table 1.

$$\text{Swelling ratio} = [(Ws - Wd)/Wd] \times 100$$

**Test Example 2 Evaluation of breaking energy (tensile test of polymer)**

A polyethylene terephthalate (PET) release film was coated with the binder solution prepared as above, dried for 10 hours under the conditions of 150°C and 10 Torr or less, and then peeled off, thereby preparing a binder film having a film thickness of 0.030 to 0.150 mm. This binder film was cut into a rectangular shape having a length of 3 cm and a width of 1 cm, thereby preparing a test piece. The upper and lower portions of the test piece were covered with an aluminum tape by 1 cm, the covered portion was fixed to a jig, and a load to displacement was measured using a tensile tester (trade name: FGS-TV, manufactured by NIDEC-SHIMPO CORPORATION). From the measured results, a stress-strain curve was obtained. It should be noted that the room temperature during the measurement was 23°C. The breaking energy was calculated from the area (energy required until breaking occurs) of the obtained stress-strain curve. The results are shown in Table 1.

**Test Example 3 Evaluation of AB dispersibility**

The binder solution prepared as above and acetylene black (AB, trade name: DENKA BLACK (powderlike), average particle diameter: 35 nm, specific surface area: 68 $m^2/g$, manufactured by Denka Company Limited.) were added to a 60 mL ointment container (manufactured by Umano Kagaku Youki Kabushiki Gaisya) such that the mass

ratio of binder(solid content)/AB was 50/60. Furthermore, distilled water was added thereto such that the concentration of total solid content was 2.2% by mass, and the mixture was repeatedly dispersed 3 times for 3 minutes at 2,000 rpm by using AWATORI RENTARO (trade name, manufactured by THINKY CORPORATION). Distilled water was further added to the dispersed liquid such that the concentration of the total solid content was 0.015% by mass, and the mixture was dispersed at 2,000 rpm for 3 minutes by using AWATORI RENTARO (trade name, manufactured by THINKY CORPORATION). One minute after the dispersion treatment finished, the particle diameter of AB in the obtained dispersion liquid was measured by a dynamic light scattering method using a zeta potential analyzer (trade name: ELSZ-1000, manufactured by OTSUKA ELECTRONICS CO., LTD). It should be noted that the total solid content means the binder and AB.

The results are shown in Table 1.

Table 1

| No. | M1 | | M2 | | M3 | | Neutralizing agent※1 | | Degree of neutralization (mol%) | Crosslinking agent | $M_W$※2 | AB Particle diameter (μm) | Simulated electrolytic solution swelling ratio (% by mass) | Breaking energy (MPa) |
|---|---|---|---|---|---|---|---|---|---|---|---|---|---|---|
| | Type | Content (% by mass) | Type | Content (% by mass) | Type | Content (% by mass) | 1 | 2 | | | | | | |
| B-1 | A-1 | 10.0 | D-6 | 90.0 | - | - | NaOH | - | 80 | PZ-33 | 331000 | 22 | 3 | 5.0 |
| B-2 | A-1 | 10.0 | D-6 | 90.0 | - | - | NaOH | - | 80 | DZ-22E | 331000 | 2.1 | 3 | 4.8 |
| B-3 | A-1 | 10.0 | D-6 | 90.0 | - | - | LiOH | - | 80 | PZ-33 | 329000 | 2.1 | 4 | 4.8 |
| B-4 | A-1 | 10.0 | D-6 | 90.0 | - | - | NaOH | PEI | 80 | PZ-33 | 1881000*3 | 2.3 | 3 | 8.9 |
| B-5 | A-1 | 10.0 | D-6 | 80.0 | D-15 | 10.0 | NaOH | - | 80 | PZ-33 | 325000 | 1.8 | 5 | 8.9 |
| B-6 | A-1 | 10.0 | D-6 | 80.0 | D-15 | 10.0 | LiOH | - | 80 | PZ-33 | 314000 | 2.0 | 7 | 9.0 |
| B-7 | A-1 | 10.0 | D-6 | 80.0 | D-15 | 10.0 | NaOH | PEI | 80 | PZ-33 | 1552000*3 | 2.2 | 5 | 10.6 |
| B-8 | A-1 | 10.0 | D-6 | 80.0 | D-8 | 10.0 | NaOH | - | 80 | PZ-33 | 321000 | 23 | 5 | 6.0 |
| B-9 | A-1 | 10.0 | D-6 | 80.0 | D-14 | 10.0 | NaOH | - | 80 | PZ-33 | 315000 | 2.2 | 6 | 5.8 |
| B-10 | A-1 | 10.0 | D-16 | 90.0 | - | - | NaOH | - | 80 | PZ-33 | 345000 | 8.0 | 2 | 4.5 |
| BC-1 | A-1 | 100.0 | - | - | - | - | NaOH | - | 80 | PZ-33 | 350000 | 10.1 | 2 | 3.2 |
| BC-2 | A-1 | 100.0 | - | - | - | - | LiOH | - | 80 | PZ-33 | 350000 | 11.2 | 2 | 2.0 |
| BC-3 | A-1 | 10.0 | D-6 | 90.0 | - | - | NaOH | - | 80 | TDI | 331000 | 2.1 | 20 | 2.1 |
| BC-4 | D-3 | 58.0 | D-8 | 40.0 | D-15 | 2.0 | Absent | - | - | PZ-33 | -※4 | -※4 | 55 | 4.2 |
| BC-5 | A-1 | 10.0 | D-6 | 90.0 | - | - | NaOH | - | 80 | EX-810 | 331000 | 2.1 | 11 | 2.0 |

※1: In a case where a binder contains two kinds of neutralizing agents, the molar ratio of the contained neutralizing agents is Neutralizing agent 1 Neutralizing agent 2 = 90:10.
※2:Mw measured before aziridine cross linking
※3:Mw measured by static light scattering
※4:Having solubility less than .0.1 g/L in water at 20°C, BC-4 is insoluble in water, which makes it impossible to measure Mw and the particle diameter of AB under the same conditions.

**Notes in table**

"-": means that the sample does not contain the component.

PEI: polyethyleneimine (weight-average molecular weight: 10,000, manufactured by FUJIFILM Wako Pure Chemical Corporation)

PZ-33: CHEMITITE PZ-33 (trade name, manufactured by NIPPON SHOKUBAI CO., LTD.) and DZ-22E: CHEMITITE DZ-22E (trade name, manufactured by NIPPON SHOKUBAI CO., LTD.) are compounds having the following structures.

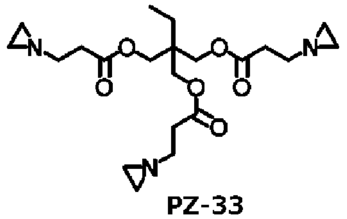

PZ-33

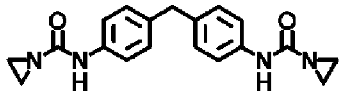

DZ-22E

EX-810: DECONAL EX-810 (trade name, ethylene glycol diglycidyl ether, manufactured by Nagase ChemteX Corporation.) TDI: tolylene diisocyanate is a mixture of the following compounds.

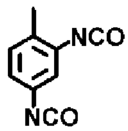

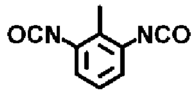

M-1 to M-3 mean monomer components that lead to each constitutional component of the copolymer, and each have the following structure. In addition, the temperature shown below each monomer component is Tg of the corresponding homopolymer, which is determined by the method described above.

A-1

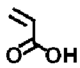

106℃

D-3

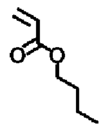

-55℃

D-6

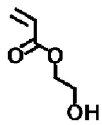

-15℃

D-8

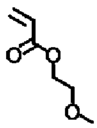

-50℃

D-14

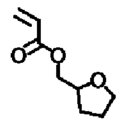

-12℃

D-15

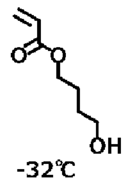

-32℃

D-16

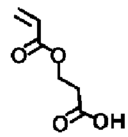

37℃

**Preparation of composition for secondary battery electrode**

Silicon monoxide (1.35 g, average particle diameter: 5 μm, manufactured by OSAKA Titanium technologies), 3.15 g of graphite (trade name: MAG-D, manufactured by Hitachi Chemical Company, Ltd.), 0.25 g of acetylene black (trade name: DENKA BLACK (powderlike), average particle diameter: 35 nm, specific surface area: 68 $m^2/g$, manufactured by Denka Company Limited.), 2.50 g of an aqueous solution of the binder B-1 (amount of solid content: 0.25 g), and 1.6 g of distilled water were added to a 60 mL ointment container (manufactured by Umano Kagaku Youki Kabushiki Gaisya), and the mixture was dispersed at 2,000 rpm for 10 minutes by using AWATORI RENTARO (trade name, manufactured by THINKY CORPORATION). Distilled water (1.3 g) was added to the dispersed liquid and dispersed at 2,000 rpm for 10 minutes by using AWATORI RENTARO (trade name, manufactured by THINKY CORPORATION), thereby preparing a composition C-1 for a secondary battery electrode.

Compositions C-2 to C-10 and CC-1 to CC-5 for a secondary battery electrode were prepared in the same manner as in the preparation of the composition C-1 for a secondary battery electrode, except that the binder was changed to the binder shown in the following Table 2 such that the amounts of solid content of the binders were the same.

**Preparation of electrode sheet**

A copper foil having a thickness of 20 μm was coated with the obtained composition for a secondary battery electrode by using an applicator (trade name: SA-204 film applicator with a micrometer, manufactured by TESTER SANGYO CO., LTD.), and dried at 80°C for 1 hour. Then, the copper foil was pressed using a roll press machine, thereby obtaining an electrode sheet containing an electrode mixture having a density of 1.5 g/$cm^3$. Thereafter, the electrode sheet was dried at 150°C for 6 hours under vacuum conditions (10 Torr or less) to form an electrode active material layer having a thickness of 25 μm, thereby obtaining an electrode sheet having a total thickness of 45 μm.

**Test Example 4 Evaluation of bonding properties**

A test piece having a width of 10 mm and a length of 50 mm was cut out from the electrode sheet prepared as above, and a pressure-sensitive adhesive tape having the same width was bonded to the surface of the test piece on the side of the electrode active material layer such that the entire surface of the electrode active material layer was covered. Then, the pressure-sensitive adhesive tape was peeled off in the lengthwise direction at an angle of 90° and a speed of 100 mm/min, and at this time, the average stress was measured. The above measurement was repeated 8 times, and the average of the average stress determined by 8 times of the measurement was assigned with the following evaluation ranks to evaluate the bonding properties. The passing level of this test is the evaluation standard "3" or higher. The results are shown in Table 2.

**Evaluation rank of bonding properties**

6: 0.6 N or more
5: 0.4 N or more and less than 0.6 N
4: 0.2 N or more and less than 0.4 N
3: 0.1 N or more and less than 0.2 N
2: 0.05 N or more and less than 0.1 N
1: Less than 0.05 N

**Preparation of 2032-type coin battery**

The electrode sheet prepared as above was cut into a disk shape having a diameter of 13.0 mm and used as a negative electrode. A lithium foil (thickness: 50 μm, 14.5 mmφ) and a polypropylene separator (thickness: 25 μm, 16.0 mmφ) were laminated in this order, and the separator was impregnated with 200 μL of the following electrolytic solution A. The following electrolytic solution A (200 μL) was further added to the surface of the separator (the separator was further impregnated with the electrolytic solution A), and the negative electrode was superposed thereon such that the surface of the electrode active material layer came into contact with the separator. Then, the resultant was crimped by a 2032-type coin case, thereby preparing a coin battery (secondary battery). In this coin battery, a Li foil, a separator, a negative electrode active material layer, and a copper foil are laminated in this order.

**Electrolytic solution A**

A 1 M $LiPF_6$ electrolytic solution containing a mixed solvent of ethylene carbonate/ethylmethylcarbonate = 1/2 (mass ratio) as a solvent.

**Test Example 5 Evaluation of cycle characteristics**

As the battery characteristics of the secondary battery, the cycle characteristics were evaluated based on the discharge capacity retention rate.

Specifically, the discharge capacity retention rate of the secondary battery prepared as above was measured using a charge/discharge evaluation device: TOSCAT-3000 (trade name, manufactured by TOYO SYSTEM CO., LTD.). The secondary battery was charged at a Crate of 0.2 C (a rate at which the battery was fully charged in 5 hours) until the battery voltage reached 0.02 V The secondary battery was discharged at a C rate of 0.2C until the battery voltage reached 1.5 V The charge and discharge of the secondary battery was repeated 3 cycles which each consists of a single charge and a single discharge, thereby initializing the secondary battery.

After initialization, the secondary battery was charged at 0.5 C until the battery voltage reached 0.02 V and

then discharged at 0.5 C until the battery voltage reached 1.5 V The charge and discharge of the secondary battery was repeated 50 cycles which each consists of a single charge and a single discharge. On the assumption that the discharge capacity (initial discharge capacity) of the first cycle after the initialization is 100%, the discharge capacity retention rate at the 50th cycle (ratio of the discharge capacity at the 50th cycle to the initial discharge capacity) was measured. The discharge capacity retention rate was assigned with the following evaluation ranks to evaluate the cycle characteristics. The passing level of this test is the evaluation standard "3" or higher. The results are shown in Table 2.

It should be noted that all the secondary battery Nos. C-1 to C-10 showed the initial discharge capacity enough for the batteries to function as a secondary battery.

**Evaluation rank of cycle characteristics**

6: 92% or more
5: 87% or more and less than 92%
4: 80% or more and less than 87%
3: 70% or more and less than 80%
2: 50% or more and less than 70%
1: Less than 50%

**Test Example 6 Evaluation of resistance**

As the battery characteristics of the secondary battery, the level of resistance was evaluated.

The secondary battery prepared as above was initialized by the same method as in Evaluation of cycle characteristics. After initialization, the secondary battery was charged at 0.2 C until the battery voltage reached 0.02 V and then discharged at 2 C until the battery voltage reached 1.5 V The ratio of the discharge capacity A at this time to the discharge capacity in the third cycle during initialization was assigned with the following evaluation ranks to evaluate resistance. The smaller the ratio of the discharge capacity A (discharge capacity retention rate), the higher the resistance. The passing level of this test is the evaluation standard "3" or higher. The results are shown in Table 2.

**Evaluation rank of resistance**

6: 96% or more
5: 94% or more and less than 96%
4: 92% or more and less than 94%
3: 87% or more and less than 92%
2: 80% or more and less than 87%
1: Less than 80%

Table 2

| No. | Electrode composition | | | | | | | | Performance | | |
|---|---|---|---|---|---|---|---|---|---|---|---|
| | high-capacity active material | | Active material | | Conductive auxiliary agent | | Binder | | Bonding properties | Resistance | Cycle characteristics |
| | Type | Content % (by mass) | Type | Content % (by mass) | Type | Content % (by mass) | Type | Content % (by mass) | | | |
| C-1 | SiO | 27% | Graphite | 63% | AB | 5% | B-1 | 5% | 5 | 5 | 5 |
| C-2 | SiO | 27% | Graphite | 63% | AB | 5% | B-2 | 5% | 5 | 5 | 5 |
| C-3 | SiO | 27% | Graphite | 63% | AB | 5% | B-3 | 5% | 5 | 4 | 4 |
| C-4 | SiO | 27% | Graphite | 63% | AB | 5% | B-4 | 5% | 5 | 5 | 5 |
| C-5 | SiO | 27% | Graphite | 63% | AB | 5% | B-5 | 5% | 5 | 5 | 5 |
| C-6 | SiO | 27% | Graphite | 63% | AB | 5% | B-6 | 5% | 5 | 5 | 4 |
| C-7 | SiO | 27% | Graphite | 63% | AB | 5% | B-7 | 5% | 5 | 5 | 5 |
| C-8 | SiO | 27% | Graphite | 63% | AB | 5% | B-8 | 5% | 5 | 4 | 4 |
| C-9 | SiO | 27% | Graphite | 63% | AB | 5% | B-9 | 5% | 5 | 4 | 4 |
| C-10 | SiO | 27% | Graphite | 63% | AB | 5% | B-10 | 5% | 4 | 4 | 4 |
| CC-1 | SiO | 27% | Graphite | 63% | AB | 5% | BC-1 | 5% | 2 | 4 | 2 |
| CC-2 | SiO | 27% | Graphite | 63% | AB | 5% | BC-2 | 5% | 2 | 4 | 2 |
| CC-3 | SiO | 27% | Graphite | 63% | AB | 5% | BC-3 | 5% | 4 | 4 | 2 |
| CC-4 | SiO | 27% | Graphite | 63% | AB | 5% | BC-4 | 5% | Unmeasurable | Unmeasurable | Unmeasurable |
| CC-5 | SiO | 27% | Graphite | 63% | AB | 5% | BC-5 | 5% | 4 | 4 | 2 |

In the Table 2, the content (% by mass) of each component is the content of each component with respect to the total solid content of the composition.

What the results shown in the Tables 1 and 2 tell is as follows.

Both the binders BC-1 and BC-2 are water-soluble crosslinked polymers obtained by crosslinking a homopolymer of acrylic acid by using aziridine, and do not contain a (meth)acrylic acid ester component. These binders BC-1 and BC-2 were poor in the dispersibility of solid particles and had low breaking energy. The secondary battery Nos. CC-1 and CC-2 comprising an electrode active material layer prepared using compositions containing these binders were poor in bonding properties and cycle characteristics.

Binder BC-3 is a water-soluble crosslinked polymer obtained by crosslinking a copolymer containing a (meth)acrylic acid component and a (meth)acrylic acid ester component by using an isocyanate compound, and BC-5 is a water-soluble crosslinked polymer obtained by crosslinking a copolymer containing a (meth)acrylic acid component and a (meth)acrylic acid ester component by using a glycidyl compound. These binders BC-3 and BC-5 had a high swelling ratio with respect to the simulated electrolytic solution and a low breaking energy. The secondary battery Nos. CC-3 and CC-5 comprising an electrode active material layer prepared using compositions containing these binders were poor in cycle characteristics.

The binder BC-4 is a water-insoluble crosslinked polymer obtained by crosslinking a copolymer containing a (meth)acrylic acid ester component by using aziridine, and does not contain a (meth)acrylic acid component. The binder BC-4 is insoluble in water and has a high swelling ratio with respect to the simulated electrolytic solution, and it is difficult to apply this binder to an aqueous slurry.

On the other hand, all of the water-soluble crosslinked polymers B-1 to B-10 specified in the present invention are excellent in the dispersibility of solid particles, have a low swelling ratio with respect to the simulated electrolytic solution, and had high breaking energy. Furthermore, the electrode sheet prepared using the binder composition according to the embodiment of the present invention containing these water-soluble crosslinked polymers was excellent in the bonding properties. In addition, the secondary battery Nos. C-1 to C-10 comprising the electrode sheet were found to have a sufficiently low resistance and make it possible to sufficiently increase the cycle life.

The present application claims a priority based on Japanese Patent Application No. 2020-166584 filed in Japan on September 30, 2020, the content of which is incorporated into the present specification as a part of the description of the present specification by reference.

Reference Signs List

10: non-aqueous electrolytic solution secondary battery
1: negative electrode collector
2: negative electrode active material layer
3: separator
4: positive electrode active material layer
5: positive electrode collector
6: operation portion (light bulb)

## Claims

**1.** A secondary battery binder composition comprising:

a water-soluble crosslinked polymer obtained by crosslinking a copolymer containing a (meth)acrylic acid component and a (meth)acrylic acid ester component as constitutional components by an aziridine compound; and water.

**2.** The secondary battery binder composition according to claim 1, wherein the water-soluble crosslinked polymer has a solubility of 10 g/L or more in water at 20°C.

**3.** The secondary battery binder composition according to claim 1 or 2, wherein the (meth)acrylic acid ester component contains a component having a glass transition temperature of 20°C or lower.

**4.** The secondary battery binder composition according to any one of claims 1 to 3, wherein the water-soluble crosslinked polymer satisfies the following Condition I,

<Condition I>
in an aqueous dispersion liquid in which a content of the water-soluble crosslinked polymer is 50 parts by mass with respect to a content of 60 parts by mass of acetylene black and a total content of the acetylene black and the water-soluble crosslinked polymer is 0.015% by mass, an average particle diameter of particles is 9.0 μm or less.

**5.** The secondary battery binder composition according to any one of claims 1 to 4, wherein the aziridine compound is a compound represented by any of the general formulas (1) to (3),

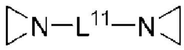 (1) 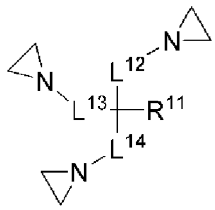 (2) 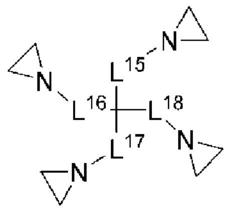 (3)

in the formulas, $R^{11}$ represents a hydrogen atom, a halogen atom, or an alkyl group, and $L^{11}$ to $L^{18}$ represent a single bond or a divalent linking group.

**6.** The secondary battery binder composition according to claim 5, wherein the aziridine compound is a compound represented by the general formula (1) or (2).

**7.** The secondary battery binder composition according to any one of claims 1 to 6, wherein the water-soluble crosslinked polymer satisfies the following <Condition II>,
<Condition II>
a swelling ratio of the water-soluble crosslinked polymer is 1% by mass or more and less than 100% by mass with respect to a mixed solvent obtained by mixing 2 parts by mass of ethyl methyl carbonate with 1 part by mass of ethylene carbonate.

**8.** The secondary battery binder composition according to any one of claims 1 to 7, wherein the (meth)acrylic acid component contains a component having a (meth)acrylic acid salt structure.

**9.** The secondary battery binder composition according to claim 8, wherein the (meth)acrylic acid salt structure has a counterion derived from a polyvalent amine.

**10.** The secondary battery binder composition according to any one of claims 1 to 9, wherein a viscosity of a 10% by mass aqueous solution of the water-soluble crosslinked polymer is 300 mPa·s to 50,000 mPa·s.

**11.** The secondary battery binder composition according to any one of claims 1 to 10, wherein a weight-average molecular weight of the copolymer is 100,000 or more.

**12.** An electrode composition comprising:

the secondary battery binder composition according to any one of claims 1 to 11; and
an active material that allows ions of a metal belonging to Group 1 or Group 2 of the periodic table to be inserted into and released from the active material.

**13.** An electrode sheet comprising:
a layer composed of the electrode composition according to claim 12.

**14.** A secondary battery comprising, in the following order:

a positive electrode;
a separator; and
a negative electrode,
wherein at least one of a positive electrode active material layer constituting the positive electrode or a negative electrode active material layer constituting the negative electrode is a layer composed of the electrode composition according to claim 12.

**15.** A production method for an electrode sheet, comprising:

forming a film of the electrode composition according to claim 12; and
drying the film.

**16.** A production method for a secondary battery comprising:
incorporating an electrode sheet obtained by the production method according to claim 15 into an electrode of a secondary battery.

FIG. 1

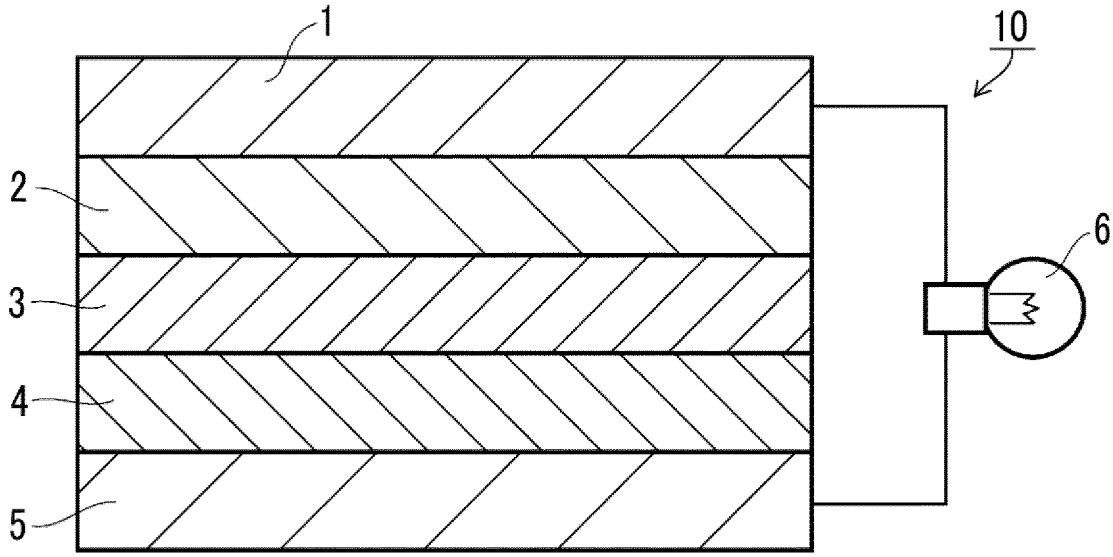

**INTERNATIONAL SEARCH REPORT**

International application No. **PCT/JP2021/034113**

**A. CLASSIFICATION OF SUBJECT MATTER**

***H01M 4/62***(2006.01)i; ***C08F 220/02***(2006.01)i; ***C08F 220/10***(2006.01)i; ***C08G 73/04***(2006.01)i; ***H01M 4/13***(2010.01)i; ***H01M 4/139***(2010.01)i

FI: H01M4/62 Z; H01M4/13; H01M4/139; C08F220/10; C08F220/02; C08G73/04

According to International Patent Classification (IPC) or to both national classification and IPC

**B. FIELDS SEARCHED**

Minimum documentation searched (classification system followed by classification symbols)

H01M4/62; C08F220/02; C08F220/10; C08G73/04; H01M4/13; H01M4/139

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2020-521279 A (JOHNSON MATTHEY PUBLIC LTD., CO.) 16 July 2020 (2020-07-16) claims, paragraphs [0008]-[0009], [0033], [0083], tables 3, 4, example 15 | 1-16 |
| X | US 6566006 B1 (MOLTECH CORPORATION) 20 May 2003 (2003-05-20) column 1, example 1 | 1-16 |
| A | WO 2016/186076 A1 (TOPPAN PRINTING CO., LTD.) 24 November 2016 (2016-11-24) | 1-16 |
| A | JP 2018-106935 A (TOPPAN PRINTING CO., LTD.) 05 July 2018 (2018-07-05) | 1-16 |
| A | KR 10-2017-0076296 A (LG CHEM, LTD.) 04 July 2017 (2017-07-04) | 1-16 |

☐ Further documents are listed in the continuation of Box C.　☑ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **08 October 2021** | **26 October 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/034113**

| Patent document cited in search report | Publication date (day/month/year) | Patent family member(s) | Publication date (day/month/year) |
|---|---|---|---|
| JP 2020-521279 A | 16 July 2020 | US 2020/0075934 A1<br>claims, paragraphs [0010]-[0011], [0050], [0116]-[0117], tables 3, 4, example 15<br>WO 2018/213160 A1<br>EP 3635802 A1<br>KR 10-2020-0009051 A<br>CN 110870104 A | |
| US 6566006 B1 | 20 May 2003 | WO 2002/025751 A2<br>AU 9278601 A | |
| WO 2016/186076 A1 | 24 November 2016 | US 2018/0069242 A1<br>EP 3300148 A1<br>CN 107615534 A<br>KR 10-2018-0011113 A | |
| JP 2018-106935 A | 05 July 2018 | (Family: none) | |
| KR 10-2017-0076296 A | 04 July 2017 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2016051811 A
- JP 2017004682 A
- WO 2019203334 A
- JP 2015046389 A
- JP 2016201308 A
- JP 2005108835 A
- JP 2012185938 A
- JP 2016528357 A
- JP 2020166584 A